# EUROPEAN PATENT APPLICATION

(11) **EP 4 667 342 A1**
(43) Date of publication of application: **24.12.2025**
(21) Application number: 25183795.1
(22) Date of filing: 18.06.2025
(51) Int. Cl.: B62K 25/08, B62K 21/02, F16F 9/32, F16F 9/48

(54) **SUSPENSION FORKS FOR BICYCLES**

(30) Priority: 20.06.2024 US 202418749203; 16.07.2024 US 202463672199 P; 17.06.2025 US 202519240437
(71) Applicant: SRAM, LLC, Chicago, IL 60607 (US)
(72) Inventor: STAGNER, Bronson, Colorado Springs, 80907 (US); LYNCH, Timothy, Colorado Springs, 80907 (US); ROSENBERRY, Alexander J, COLORADO SPRINGS, 80907 (US); MAXWELL, Michael, COLORADO SPRINGS, 80907 (US)
(74) Representative: Thum, Bernhard

(57) **Abstract**

Suspension forks for bicycles are described herein. An example suspension fork (200) includes a first tube (222) and a second tube (226) slidably received within the first tube. The first tube includes an outer mounting portion. A first volume (326) is disposed between the first tube and the second tube. A sealing element (380) is provided for sealing the first volume between the first tube and the second tube. A volume control element is removably attachable to the outer mounting portion of the first tube, wherein the volume control element is operable to change a magnitude of the first volume disposed between the first tube and the second tube.

## Description

This application is a continuation-in-part of U.S. Patent Application 18/749,206, filed June 20, 2024, and claims priority to U.S. Provisional Patent Application 63/672,199, filed July 16, 2024, the contents of which are hereby incorporated by reference in their entirety.

### FIELD OF THE DISCLOSURE

This disclosure relates generally to bicycle components and, more specifically, to suspension forks for bicycles.

### BACKGROUND

Bicycles are known to have suspension components. Suspension components are used for various applications, such as cushioning impacts, vibrations, or other disturbances experienced by the bicycle and rider during use as well as maintaining ground contact for traction. A common application for suspension components on bicycles is cushioning impacts or vibrations experienced by the rider when the bicycle is ridden over bumps, ruts, rocks, potholes, and/or other obstacles. These suspension components include rear and/or front wheel suspension components. For example, some bicycles include a front fork with telescoping legs that incorporate a spring and/or damper system.

### SUMMARY

An example suspension fork for a bicycle includes a first tube including an outer mounting portion; a second tube slidably received within the first tube. A first volume is disposed between the first tube and the second tube. A sealing element is provided, sealing the first volume between the first tube and the second tube. A volume control element is removably attachable to the outer mounting portion of the first tube, wherein the volume control element is operable to change a magnitude of the first volume disposed between the first tube and the second tube.

### BRIEF DESCRIPTION OF THE DRAWINGS

FIG. 1 is a side view of an example bicycle that can employ any of the example front forks disclosed herein.
FIG. 2 is a perspective view of an example front fork that can be implemented on the example bicycle of FIG. 1.
FIG. 3A is a cross-sectional view of the example front fork of FIG. 2.
FIG. 3B is an enlarged, partial view of the example front fork of FIG. 3A.
FIG. 4A is a perspective view of an example lower housing of an example front fork that can be implemented on the example bicycle of FIG. 1.
FIG. 4B is a side view of the example lower housing of FIG. 4A.
FIG. 5A is a cross-sectional view of the example lower housing of FIG. 4B.
FIG. 5B is a partial enlarged view of the callout of FIG. 5A.
FIG. 6 is a cross-sectional side view of the example lower housing of FIGS. 4A, 4B, 5A and 5B shown with an example cap.
FIG. 7 is a cross-sectional side view of the example lower housing of FIGS. 4A, 4B, 5A and 5B shown with another example cap.
FIG. 8A is a front view of another example lower housing of an example front fork that can be implemented on the example bicycle of FIG. 1.
FIG. 8B is a side view of the example lower housing of FIG. 8A.
FIG. 8C is a cross-sectional view of the example lower housing of FIG. 8B.
FIG. 9A is a cross-sectional view of the example lower housing of FIG. 8C shown with an example cap.
FIG. 9B is an enlarged, partial view of the callout of FIG. 9A.
FIG. 10A is a perspective view of an example lower housing of an example front fork that can be implemented on the example bicycle of FIG. 1.
FIG. 10B is a side view of the example lower housing of FIG. 10A.
FIG. 10C is an exploded side view of the example lower housing of FIG. 10B.
FIG. 11A is a cross-sectional view of the example lower housing of FIG. 10B.
FIG. 11B is an enlarged, partial view of the callout of FIG. 11A.
FIG. 12 is an enlarged, partial view of yet another example lower housing of an example front fork that can be implemented on the example bicycle of FIG. 1.
FIG. 13 is a cross-sectional view of the example lower housing of FIG. 6 with an example travel spacer.
FIG. 14 is an enlarged, partial view of yet another example lower housing of an example front fork that can be implemented on the example bicycle of FIG. 1.
FIG. 15 is an enlarged, partial view of yet another example lower housing of an example front fork that can be implemented on the example bicycle of FIG. 1.

The figures are not to scale. Instead, the thickness of the layers or regions may be enlarged in the drawings. In general, the same reference numbers will be used throughout the drawing(s) and accompanying written description to refer to the same or like parts.

Descriptors "first," "second," "third," etc. are used herein when identifying multiple elements or components that may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Bicycles are known to have front forks that function as a suspension component. For example, a front fork typically includes a crown, a steerer tube extending upward from the crown, and two legs extending downward from the crown. Each leg has an upper cylindrical tube that is coupled to the crown and a lower cylindrical tube that is to be connected to the front wheel. The upper and lower cylindrical tubes are arranged in a telescopic relationship. In some instances, a damper is disposed in one of the legs and a spring (e.g., an air spring, a coil spring) is disposed in the other leg. The spring enables the front fork to compress or contract when riding over a bump or obstacle, thereby reducing the transmission of shocks and vibrations to the rider, and then returns the fork to an expanded state after the compressive force is removed. There are many components that can affect the transmission of force through the front fork, such as damping, chassis stiffness, and the spring/spring rate.

The upper tube and the lower tube of each leg define an interior region that is typically sealed. In particular, the top end of the upper tube is sealed, the bottom end of the lower tube is sealed, and a wiper seal is disposed between the upper and lower tubes. This helps to keep outside contaminants (e.g., dirt, debris) from entering the interior region of the leg, as well as help retain oil or other lubricant (e.g., grease) in the interior region. Therefore, a volume of air is contained within the sealed interior region and, specifically, within the lower tube. This air is separate or isolated from the fluid in the damper or spring systems. This region is sometimes referred to as the casting volume. The air sealed in the interior region in the lower tube is typically at atmospheric pressure when the front fork is in the expanded or relaxed state. When the front fork is compressed, the upper tube is pushed into the lower tube, which decreases the volume in the lower tube. This causes an increase in pressure of the air in the lower tube. This increased pressure acts as an air spring, sometimes referred to as a casting ramp spring, which applies force to expand the upper and lower tubes back to their expanded positions. Therefore, the spring components of known front fork suspensions can include a positive spring, a negative spring, and a casting ramp spring. The positive spring and negative spring are inherent to the spring design, whereas the casting ramp spring is the byproduct of the chassis and telescoping nature of a fork. The force generated by the casting ramp spring in the lower tube affects or impacts the spring rate of the spring, as well as creates a higher breakaway force needed to compress the fork. This casting ramp spring effect is also speed sensitive, meaning the faster the front fork is compressed, the higher the return force is generated. Therefore, it is desired to keep the casting ramp spring rate as small (e.g., minimal) as possible.

Disclosed herein are example front forks with increased internal air volume. In an embodiment, the increased internal air volume is an increased air volume in a lower leg, for example an increased casting volume (e.g., an overall casting volume capacity or air capacity) and/or improved compression ratio. Increasing a casting volume capacity of a front fork can affect (e.g., improve) spring performance (e.g., a spring rate and/or spring force force) of a front fork suspension. In particular, because the casting volume capacity is increased, the forces generated by the casting ramp spring during compression are reduced and, thus, have less of an influence on the fork. Additionally, as another benefit of increasing a casting volume capacity, the speed sensitivity is reduced, which provides a more consistent feel for the rider.

Examples disclosed herein provide an overall casting volume capacity within a front fork or suspension fork of a suspension. For example, a front fork includes an upper tube and a lower tube. Example upper tubes disclosed herein a first end and a second end opposite the first end, and the lower tube has a third end and a fourth end opposite the third end. The upper tube extends into the third end of the lower tube to provide a telescopic arrangement along an axis. A seal is coupled to the lower tube adjacent to the third end of the lower tube. The seal forms a sealed residual air space within the lower tube, where the sealed residual air space defines or provides a casting volume capacity (e.g., a total casting volume capacity or cavity). Example front fork suspension components disclosed herein include a sealed residual air space having different sized, cross-sectional areas along a length of the lower tube defining the sealed residual air space. For example, a lower tube of an example front fork suspension disclosed herein includes a first cross sectional area of the sealed residual air space taken perpendicular to a longitudinal axis of the lower tube at a first location of the lower tube adjacent the fourth end of the lower tube is larger than a second cross sectional area of the sealed residual air space of the lower tube taken perpendicular to the longitudinal axis at a second location of the of the lower tube adjacent the third end of the lower tube. In some examples, the first location is below a first bushing coupled to (e.g., linearly fixed to) the lower tube between a second bushing adjacent the third end of the lower tube and the fourth end of the lower tube, and the second location is above the first bushing. In some examples, the first location is below a midpoint of a length of the lower tube and the second location is above the midpoint.

To provide a casting volume capacity of a suspension system, some example front forks disclosed herein can include a casting cavity or housing coupled to (e.g., a rear and/or side of) a lower leg of a front fork. In some examples, the housing can be constructed (e.g., formed via casting) with the lower leg and/or the front fork. In some examples, one or more removable plugs, caps or other fasteners can be coupled to the lower leg and/or the housing. The housing contributes to a casting volume capacity (e.g., a total expansion capacity) of the lower leg, which reduces instances of pressure spikes during a compression of the suspension. In some examples, one or more removable plugs can include an additional cavity or volume chamber to further increase a volume capacity (e.g., a total casting volume capacity) of the lower leg. Therefore, in some examples, the front fork can include a first portion of a casting volume provided by a first cavity provided by a lower tube of a fork suspension system, a second portion of the casting volume provided by a second cavity of a housing protruding from the lower tube, and a third portion of the casting volume provided by a third cavity of a removable plug that can couple to the lower tube and/or the housing. The first cavity, the second cavity and the third cavity collectively define a casting volume capacity or a sealed residual air space (e.g., a total or maximum volume casting capacity) of a suspension system provided by a front fork. In some examples, a first cross sectional area of the front fork taken perpendicular to a longitudinal axis of the lower leg at a first location of the lower leg across the lower tube and the housing is larger than a second cross sectional area of the lower leg taken perpendicular to the longitudinal axis at a second location of the of the lower leg that does not include the housing. In some examples, the first location is below a midpoint of the lower leg or below a bushing of the lower leg and the second location is above the midpoint of the lower leg or above the bushing.

In some examples, a front fork can be provided with a flare and/or tapered profile to define a volume capacity of a casting volume of an interior cavity or a sealed residual air space of the front fork. For example, a lower leg of a front fork can be manufactured with a varying (e.g., an increasing) diameter to increase a casting volume capacity or a volume of air capacity of the lower leg and/or the front fork. In some instances, a portion of a lower leg of the front fork can flare outwardly radially or circumferentially about a longitudinal axis of the lower leg and/or relative to an upper leg of the front fork. In other words, a first portion of a leg of the front fork can have a first diameter and a second portion of the leg can have a second diameter different than the first diameter. In some examples, a first cross sectional area of the front fork taken perpendicular to a longitudinal axis of the lower leg at a first location of the lower leg is larger than a second cross sectional area of the lower leg taken perpendicular to the longitudinal axis at a second location of the of the lower leg. In some examples, the first location is below a midpoint of the lower leg or below a bushing of the lower leg and the second location is above the midpoint of the lower leg or above the bushing.

As used herein, a casting volume capacity or a sealed residual air space means a total fixed volume or a non-expanding volume. In other words, a casting volume capacity or a sealed residual space disclosed herein is defined by one or more cavities defined by one or more walls of a structure. Extension or expansion cavities or chambers disclosed herein means that the extension chambers contribute to a total volume capacity (e.g., a total casting volume capacity) or a closed, fixed volume of a fork suspension (e.g., to restrict pressure increases or pressure spikes in the closed volume). The casting volume capacity and/or a sealed residual space disclosed herein can be provided by a plurality of internal regions or cavities or can be provided by varying a dimension (e.g., a diameter or area) of a lower tube of a fork suspension.

In an embodiment, a lower casting may include an increased casting volume in a space radially outward of a space defined by a tube inserted into the casting. For example, the radially outward space may be increased in a perpendicular cross section of the lower taken below a bushing when compared to a radially outward space of a perpendicular cross section taken above a bushing.

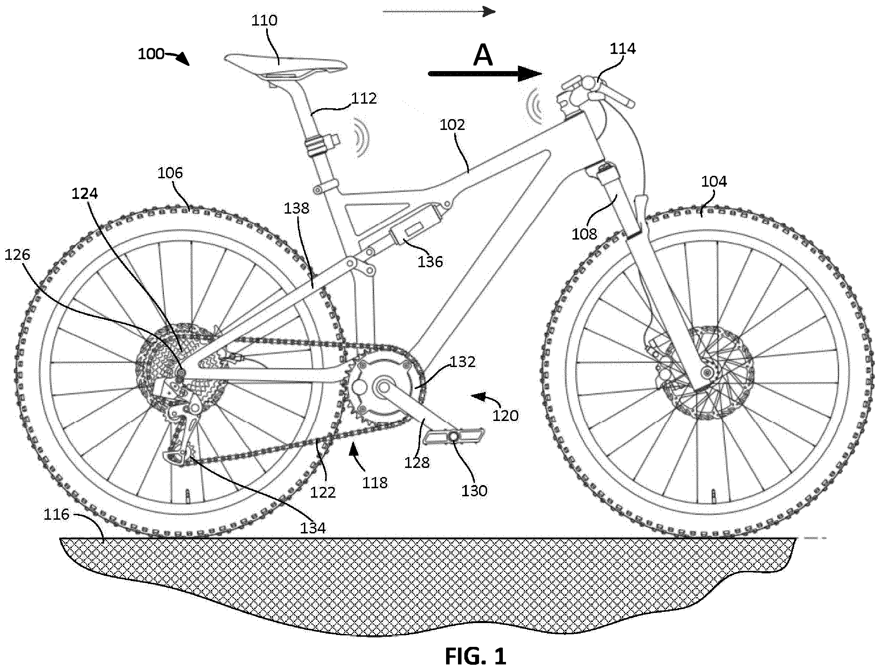

Turning now to the figures, FIG. 1 illustrates one example of a human powered vehicle on which the example front forks disclosed herein may be implemented. In this example, the vehicle is one possible type of bicycle 100, such as a mountain bicycle. In the illustrated example, the bicycle 100 includes a frame 102 and a front wheel 104 and a rear wheel 106 rotatably coupled to the frame 102. In the illustrated example, the front wheel 104 is coupled to the front end of the frame 102 via a front fork 108. A front and/or forward riding direction or orientation of the bicycle 100 is indicated by the direction of the arrow A in FIG. 1. As such, a forward direction of movement for the bicycle 100 is indicated by the direction of arrow A.

In the illustrated example of FIG. 1, the bicycle 100 includes a seat 110 coupled to the frame 102 (e.g., near the rear end of the frame 102 relative to the forward direction A) via a seat post 112. The bicycle 100 also includes handlebars 114 coupled to the front fork 108 (e.g., near a forward end of the frame 102 relative to the forward direction A) for steering the bicycle 100. The bicycle 100 is shown on a riding surface 116. The riding surface 116 may be any riding surface such as the ground (e.g., a dirt path, a sidewalk, a street, etc.), a man-made structure above the ground (e.g., a wooden ramp), and/or any other surface.

In the illustrated example, the bicycle 100 has a drivetrain 118 that includes a crank assembly 120. The crank assembly 120 is operatively coupled via a chain 122 to a sprocket assembly 124 mounted to a hub 126 of the rear wheel 106. The crank assembly 120 includes at least one, and typically two, crank arms 128 and pedals 130, along with at least one front sprocket, or chainring 132. A rear gear change device 134, such as a derailleur, is disposed at the rear wheel 106 to move the chain 122 through different sprockets of the sprocket assembly 124. Additionally or alternatively, the bicycle 100 may include a front gear change device to move the chain 122 through gears on the chainring 132.

The example bicycle 100 includes a suspension system having one or more suspension components. In this example, the front fork 108 is implemented as a front suspension component. The front fork 108 is or integrates a shock absorber that includes a spring and a damper, disclosed in further detail herein. Further, in the illustrated example, the bicycle 100 includes a rear suspension component 136, which is a shock absorber, referred to herein as the rear shock absorber 136. The rear shock absorber 136 is coupled between two portions of the frame 102, including a swing arm 138 coupled to the rear wheel 106. The front fork 108 and the rear shock absorber 136 absorb shocks and vibrations while riding the bicycle 100 (e.g., when riding over rough terrain). In other examples, the front fork 108 and/or the rear shock absorber 136 may be integrated into the bicycle 100 in other configurations or arrangements. Further, in other examples, the suspension system may employ only one suspension component (e.g., only the front fork 108) or more than two suspension components (e.g., an additional suspension component on the seat post 112) in addition to or as an alternative to the front fork 108 and rear shock absorber 136.

While the example bicycle 100 depicted in FIG. 1 is a type of mountain bicycle, the example front forks (and/or lower housings or housings) disclosed herein can be implemented on other types of bicycles. For example, the disclosed front forks may be used on road bicycles, as well as bicycles with mechanical (e.g., cable, hydraulic, pneumatic, etc.) and non-mechanical (e.g., wired, wireless) drive systems. The disclosed front forks can also be implemented on other types of two-wheeled, three-wheeled, and four-wheeled human powered vehicles. Further, the example front forks can be used on other types of vehicles, such as motorized vehicles (e.g., a motorcycle, a car, a truck, etc.).

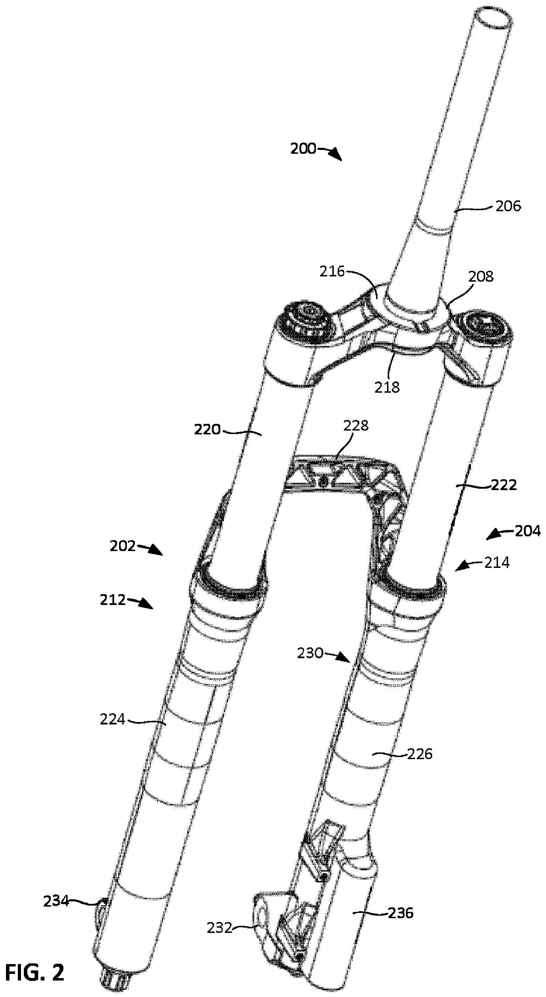

FIG. 2 is a perspective rear view of an example front fork 200 (e.g., a suspension component) that can be implemented as the front fork 108 on the bicycle 100 of FIG. 1. In the illustrated example of FIG. 2, the front fork 200 includes a steerer tube 206, a crown 208, a first leg 212, and a second leg 214. The crown 208 has a top side 216 and a bottom side 218 opposite the top side 216. The steerer tube 206 is coupled to the crown 208 and extends outward (e.g., upward) from the top side 216 of the crown 208. The steerer tube 206 is to be inserted through a neck tube on the frame 102 (FIG. 1) of the bicycle and coupled to the handlebars 114 (FIG. 1). The steerer tube 206 can be tapered or straight. In some examples, the steerer tube 206 is constructed of aluminum or carbon fiber. In other examples, the steerer tube 206 can be constructed of other materials in other examples. The first and second legs 212, 214 are coupled to the crown 208 and extend outward (e.g., downward) from the bottom side 218 of the crown 208. The first and second legs 212, 214 are to be coupled to the front wheel 104 (FIG. 1). In the illustrated example, the first leg 212 is spaced from the second leg 214. The fork configuration shown in FIG. 2 is often referred to as a single crown fork.

In the illustrated example, the first and second legs 212, 214 include first and second upper tubes 220, 222, respectively, and first and second lower tubes 224, 226, respectively. The first and second upper and lower tubes 220, 222, 224, 226 are sometimes referred to as stanchions or leg portions. The first and second upper tubes 220, 222 are coupled to the crown 208. The front fork 200 includes an arch 228 (sometimes referred to as a fork brace or stabilizer) coupled between the first and second lower tubes 224, 226. As used herein, the first and second lower tubes 224, 226 and the arch 228 are referred to as a lower housing 230, and which may also be referred to as a lower tube assembly. In some examples, the lower housing 230 (i.e., the lower including first and second lower tubes 224, 226 and the arch 228) is constructed as a single part or component (e.g., a monolithic structure), such as from a one-piece casting (e.g., from metal such as aluminum) or a one-piece carbon fiber structure. In some examples, the lower housing 230 or may be constructed as separate first and second lower tubes 224, 226 that are coupled together (e.g., via welding, via threaded fasteners, etc.) by the arch 228. The first and second lower tubes 224, 226 include respective front wheel attachment portions or flanges 232, 234, having holes (e.g., eyelets) or dropouts, for attaching the front wheel 104 (FIG. 1) to the front fork 200.

The first and second upper tubes 220, 222 are slidably received within the respective first and second lower tubes 224, 226. Thus, the first and second upper tubes 220, 222 form a telescopic arrangement with the respective first and second lower tubes 224, 226. During a compression stroke, the first and second upper tubes 220, 222 move into or toward the respective first and second lower tubes 224, 226, and during a rebound stroke, the first and second upper tubes 220, 222 move out of or away from the respective first and second lower tubes 224, 226. The front fork 200 includes a damper 202 and a spring 204. In this example, the damper 202 is integrated into and/or otherwise formed at least partially by the first leg 212, and the spring 204 is integrated into and/or otherwise formed at least partially by the second leg 214. The damper 202 and the spring 204 are disclosed in further detail herein.

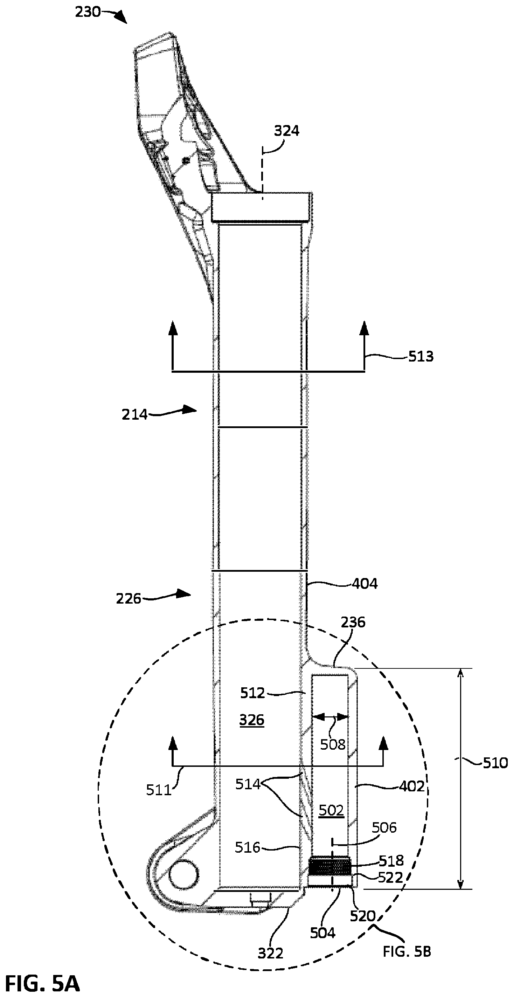

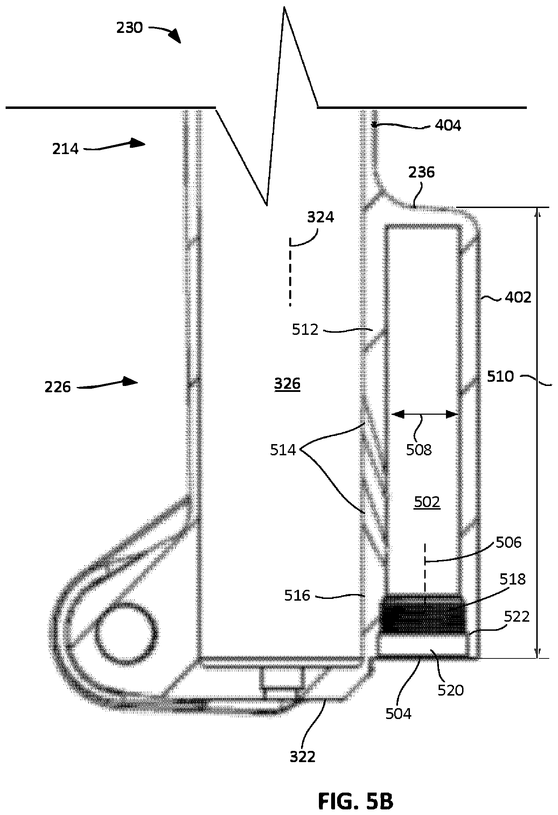

In the illustrated example, the lower housing 230 of the front fork 200 includes a housing 236 defining a cavity 502 (FIGS. 5A and 5B) (e.g., an internal region, a container, a pocket, a chamber, a supplemental chamber, a blister, a protrusion). In particular, in this example, the housing 236 is formed on the second lower tube 226. Specifically, the housing 236 of the illustrated example protrudes or projects from an outer surface of the second lower tube 226.As described in greater detail below, the housing 236 contributes to an internal volume (e.g., a total volume capacity, a casting volume, an air volume, a sealed residual air space, etc.) of the second lower tube 226 to mitigate and/or reduce effects of casting ramp spring (e.g., casting ramp behavior) during compression of the front fork 200. In other words, the housing 236 contributes to an overall volume capacity of the lower housing 230 (e.g., to provide a larger air volume during compression of the front fork 200). Although not shown, in some examples, the first lower tube 224 can also include an housing similar to the housing 236. In some examples, the first lower tube 224 and the second lower tube 226 include a housing having a different design or shape, examples of which are disclosed in further detail herein.

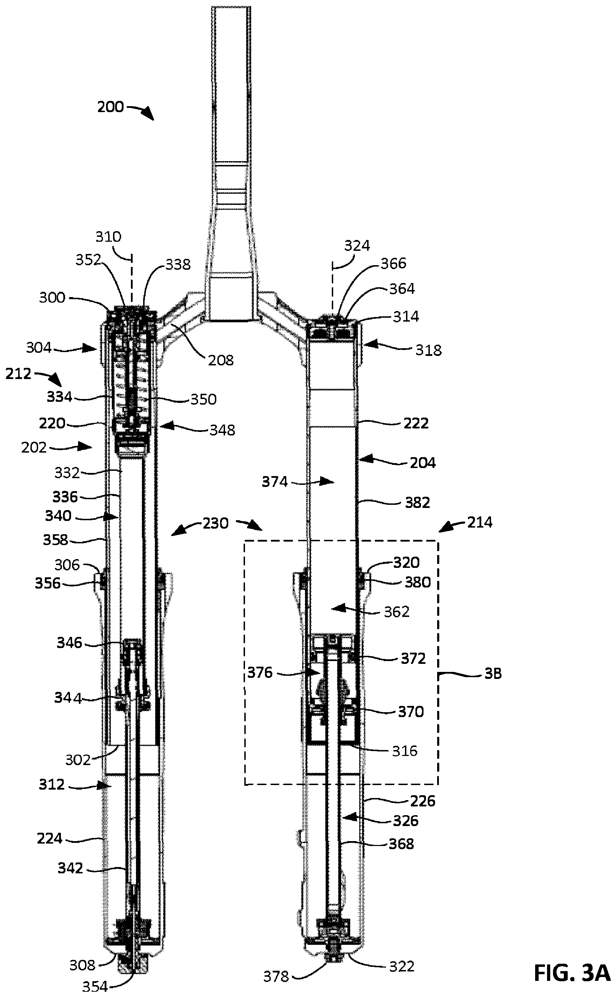

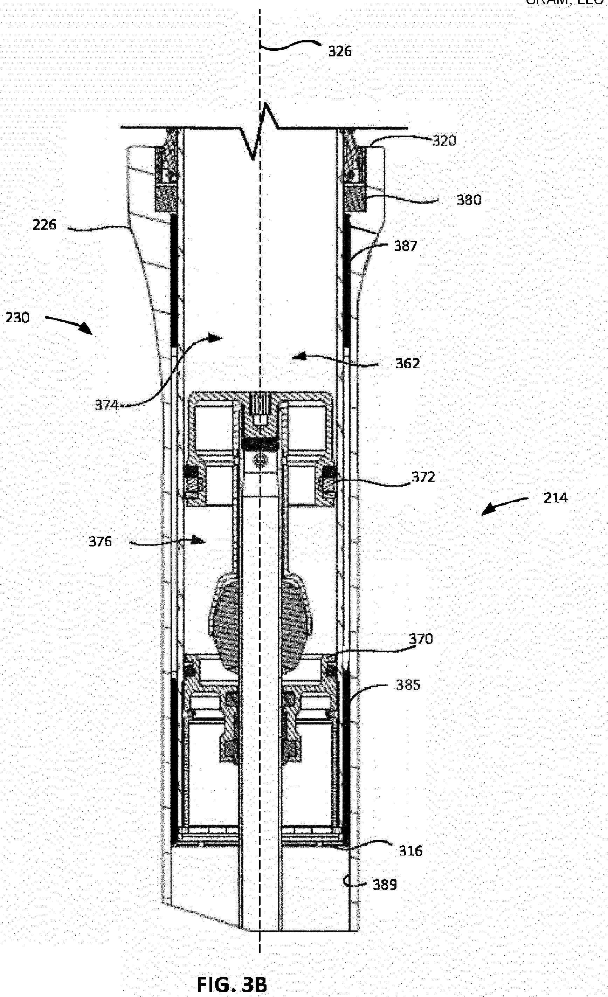

While the example front fork 200 of FIGS. 2 and 3 includes two legs, in other examples, the front fork 200 can be configured as a single-side fork that only includes one of the legs. In such an example, the single leg may include a damper, a spring, or a combination spring and damper.

FIG. 3A is a cross-sectional front view of the example front fork 200 of FIG. 2. FIG., 3B is an enlarged, partial view of the example front fork 200 of FIG. 3A. As shown in FIG. 3A, the first upper tube 220 has a first end 300, referred to herein as a top end 300, and a second end 302, referred to herein as a bottom end 302, opposite the top end 300. The top end 300 is coupled to the crown 208. In the illustrated example, a portion of the first upper tube 220 extends into an opening 304 in the crown 208. In some examples, the first upper tube 220 is friction fit in the opening 304. Additionally or alternatively, the first upper tube 220 can be coupled to the crown 208 via another mechanical and/or chemical fastening technique (e.g., threaded fasteners, welding, an adhesive, etc.). The first lower tube 224 has a first end 306, referred to herein as a top end 306, and a second end 308, referred to herein as a bottom end 308, opposite the top end 306. The first upper tube 220 is inserted into the first lower tube 224. In particular, the bottom end 302 of the first upper tube 220 is disposed within the first lower tube 224. This type of configuration is sometimes referred to as a right side up fork. The top end 300 of the first upper tube 220 and the bottom end 308 of the first lower tube 224 form first and second distal ends of the suspension component. During compression, the top end 300 and the bottom end 308 are moved toward each other, and during extension or rebound, the top end 300 and the bottom end 308 are moved away from each other. Thus, the first upper tube 220 and the first lower tube 224 form a telescopic arrangement and move along a longitudinal or central axis 310 of the first leg 212. The first upper tube 220 and the first lower tube 224 define an interior chamber or interior region 312 that is sealed, as disclosed in further detail herein.

The second upper tube 222 and the second lower tube 226 are similarly arranged. In particular, the second upper tube 220 has a first end 314, referred to herein as a top end 314, and a second end 316, referred to herein as a bottom end 316, opposite the top end 314. The top end 314 is coupled to the crown 208. In the illustrated example, a portion of the second upper tube 222 extends into an opening 318 in the crown 208. In some examples, the second upper tube 222 is friction fit in the opening 318. Additionally or alternatively, the second upper tube 222 can be coupled to the crown 208 via another mechanical and/or chemical fastening technique (e.g., threaded fasteners, welding, an adhesive, etc.). The second lower tube 226 has a first end 320, referred to herein as a top end 320, and a second end 322, referred to herein as a bottom end 322, opposite the top end 320. The second upper tube 222 is inserted into the second lower tube 226. In particular, the bottom end 316 of the second upper tube 222 is disposed within the second lower tube 226. The second upper tube 222 and the second lower tube 226 form a telescopic arrangement and move along a longitudinal or center axis 324 of the second leg 214. The second upper tube 222 and the second lower tube 226 define an interior chamber or interior region 326 that is sealed (e.g., a casting chamber, a sealed residual air space), as disclosed in further detail herein. The upper and lower tubes 220, 222, 224, 226 of the illustrated example have a cylindrical shape (e.g., a circular cross-sectional shape). However, in some examples, the upper and lower tubes 220, 222, 224, 226 can have a rectangular shape, a square shape and/or any other shape.

The front fork 200 includes both the damper 202 and the spring 204. In the illustrated example, the damper 202 is disposed in the first leg 212, and the spring 204 is disposed in the second leg 214. In this example, the spring 204 is implemented as an air spring, but can also be implemented as a coil spring in other examples. The damper 202 is configured to limit the speed at which the compression/extension occurs and/or otherwise absorb vibrations. The spring 204 is configured to resist compression of the top ends 300, 314 toward the bottom ends 308, 322 and return the upper and lower tubes 220, 222, 224, 226 to the extended position after compression occurs.

In the illustrated example, the damper 202 includes a damper body 332 (e.g., one or more cylinders) including a first portion 334 and a second portion 336. The damper body 332 is disposed in and coupled to the first upper tube 220. In particular, the damper 202 includes a first cap 338. The first portion 334 of the damper body 332 is coupled (e.g., threadably coupled) to and extends downward from the first cap 338. The first cap 338 is also coupled (e.g., threadably coupled) to the first end 300 of the first upper tube 220. As such, the damper body 332 is coupled to and disposed in a fixed position in the first upper tube 220.

The second portion 336 of the damper body 332 defines a sealed chamber 340 (e.g., a hydraulic chamber). The chamber 340 is filled with fluid. The fluid may be, for example, oil, such as a mineral oil based damping fluid. In other examples, other types of damping fluids may be used (e.g., silicone or glycol type fluids). The damper 202 includes a first shaft 342 (which may be referred to as a damper or piston shaft, rod, or stem). The first shaft 342 is coupled to and extends upward from the bottom end 308 of the first lower tube 224. The first shaft 342 extends through a bottom sealhead 344 on the damper body 332 and into the chamber 340. The damper 202 includes a damper member 346 (which may also be referred to as a piston or mid-valve) disposed in the chamber 340 of the second portion 336 of the damper body 332. The damper member 346 is coupled to the first shaft 342 and is slidable in the second portion 336 of the damper body 332. The damper member 346 divides the chamber 340 into two chambers (above and below the damper member 346). When the front fork 200 compresses and the ends of the first upper tube 220 and the first lower tube 224 move toward each other, such as when riding over a bump, the first shaft 342 moves the damper member 346 upward in the chamber 340 toward the top end 300 of the first upper tube 220. During rebound, the damper member 346 moves downward in the chamber 340 away from the top end 300 of the first upper tube 220. The damper member 346 includes one or more channels that enable fluid to flow across the damper member 346, at a restricted rate, between the first and second chambers. In some examples, a portion of the fluid from the upper chamber flows into a reservoir 348 in the damper body 332. The first portion 333 of the damper body 332 contains a spring 350 that applies pressure to the reservoir 348. In the illustrated example, the damper 202 includes an adjustment knob 352 that can be used to adjust the damping rate of the damper 202. The adjustment knob 352 is on a top of the first cap 338. In some examples, the adjustment knob 352 includes two adjustors, one for high-speed compression damping and one for low-speed compression damping. The adjustment knob 352 can be accessed by a user or rider and adjusted (e.g., pushed, twisted, etc.) to affect the damping rate.

The interior region 312 of the first leg 212 is sealed. In particular, the interior region 312 contains a volume of air in the first lower tube 224 that is sealed or isolated from the outside atmosphere. For example, the top end 300 of the first upper tube 220 is sealed by the first cap 338 and the bottom end 308 is sealed by a thread fastener 354 (which couples the first shaft 342 to the bottom end 308). Further, the front fork 200 includes a wiper seal 356 that is coupled to the first lower tube 224 near the top end 306. The wiper seal 356 slides along an outer surface 358 of the first upper tube 220 as the front fork 200 compresses or rebounds. As such, the air in the interior region 312 is sealed from the outside environment. This helps to shield the internals from outside contaminants (e.g., dirt, debris, etc.). This also helps to maintain oil or other lubricant in the interior region 312. The air in the interior region 312 is isolated or separate from the fluid (e.g., oil) in the chamber 340.

In the illustrated example, the spring 204 is implemented as an air spring that includes a pneumatic chamber 362 formed by the interior of the second upper tube 222. The front fork 200 includes a second cap 364 coupled (e.g., threadably coupled) to a top of the second upper tube 222 and seals the top of the pneumatic chamber 362. The spring 204 includes a sealhead 370 that seals the bottom of the pneumatic chamber 362. The second cap 364 includes a valve 366 that can be used to fill the pneumatic chamber 362 with fluid (e.g., compressed air, nitrogen).

The spring 204 includes a second shaft 368 (which may also be referred to as a spring or piston shaft, rod, or stem). The second shaft 368 is coupled to and extends upward from the bottom end 322 of the second lower tube 226. In particular, the second shaft 368 extends through the sealhead 370 and into the pneumatic chamber 362. The spring 204 includes a piston 372 in the pneumatic chamber 362 in the second upper tube 222. The piston 372 is coupled to the second shaft 368 and is slidable within the second upper tube 222. In some examples, a seal is disposed around the piston 372, which creates a seal between the piston 372 and the inner surface of the second upper tube 222. The piston 372 divides the pneumatic chamber 362 into a first chamber 374 and a second chamber 376. In some examples, the first chamber 374 is filled with a mass of a pneumatic fluid (e.g., a gas, such as air) having a higher pressure than ambient pressure. Therefore, in this example, the first chamber 374 forms a pressurized chamber (sometimes referred to as a highly pressurized zone or positive spring chamber). In some examples, the second chamber 376 forms a negative spring chamber below the piston 372. When the front fork 200 compresses and the ends of the second upper tube 222 and the second lower tube 226 move toward each other, such as when riding over a bump, the second shaft 368 moves the piston 372 toward the top end 314 of the second upper tube 222. As a result, the volume of the first chamber 374 decreases and, thus, the pressure of the fluid within the first chamber 374 increases. Conversely, the volume of the second chamber 376 increases and therefore the pressure of the fluid in the second chamber 376 decreases. After the compressive force is removed, the increased pressure in the first chamber 374 and the decreased pressure in the second chamber 376 acts to move the piston 372 away from the top end 314, which pushes the ends of the second upper tube 222 and the second lower tube 226 away from each other, thereby acting as a spring to return the front fork 200 to its original or riding set up. The first upper tube 220 and the first lower tube 224 similarly follow this motion.

Similar to the interior region 312 of the first leg 212, the interior region 326 of the second lower tube 226 of the second leg 214 is sealed or isolated from the outside environment. For example, the sealhead 370 separates the air in the interior region 326 in the second lower tube 226 from the compressed air in the pneumatic chamber 362 in the second upper tube 222, and the bottom end 322 of the second lower tube 226 is sealed by a thread fastener 378 (which couples the second shaft 368 to the bottom end 322). Further, the front fork 200 includes a wiper seal 380 that is coupled to the second lower tube 226 near the top end 320. The wiper seal 380 slides along an outer surface 382 of the second upper tube 222 as the front fork 200 compresses or rebounds. As such, the air in the interior region 326 (e.g., a chamber) in the second lower tube 226 is sealed from the outside environment. This helps to shield the internals from outside dirt or debris. This also helps to maintain oil or other lubricant in the interior region 326.

Referring to FIG. 3B, the front fork 200 includes first and second bushings 385, 387 in the second lower tube 226 and coupled to the inner surface 389 of the second lower tube 226. The first bushing 385 (e.g., a lower bushing) is positioned between the second bushing 387 (e.g., an upper bushing) and/or the first end 320 of the second lower tube 226 and the second end 322 of the second lower tube 226. The second bushing 387 (e.g., the upper bushing) is positioned between the first end 320 of the second lower tube 226 and the first bushing 385. Further, the first and second bushings 385, 387 are spaced axially apart from one another along the longitudinal axis 324. The first and second bushings 385, 387 are in contact with an outer surface 382 of the second upper tube 222. The first bushing 385 and/or the second bushing 387 are linearly fixed to the second lower tube 226 between the first end 320 of the second lower tube 226 and the second end 322 of the second lower tube 322.

As disclosed above, the interior regions 312, 326 of the first and second lower tubes 224, 226 are sealed to keep out contaminants while keeping in oil. The air in these interior regions 312, 326 (e.g., a first interior region or casting volume or air cavity) is typically at or close to atmospheric pressure. During a compression event, the upper tubes 220, 222 are moved downward and into the lower tubes 224, 226, which decreases the volume of the interior regions 312, 326 and thereby increases the pressure in the interior regions 312, 326. This increased pressure in the lower tubes 224, 226 acts as an additional air spring that biases or forces the front fork 200 toward the expanded position. This is commonly referred to as a casting ramp spring effect. Therefore, the pressure in the interior regions 312, 326 affect the spring rate of the front fork 200 as intended to be provided by the spring 204 and/or the damper 202. Further, the speed of the compression can have an effect on the pressure buildup in the interior region 326. Additionally, the pressure in the interior region 326 can change based on changes in altitude and/or temperature. For example, if a rider takes the bicycle up to the top of a mountain or hill, the atmospheric pressure and temperature is lower than at the bottom of the mountain or hill. This change in altitude can cause a change in the pressure in the interior region 326, which affects the pressure induced forces generated by the compressed air in the interior region 326. This change in force can be undesired by riders because it can affect or change the spring and damping performance of the front fork 200.

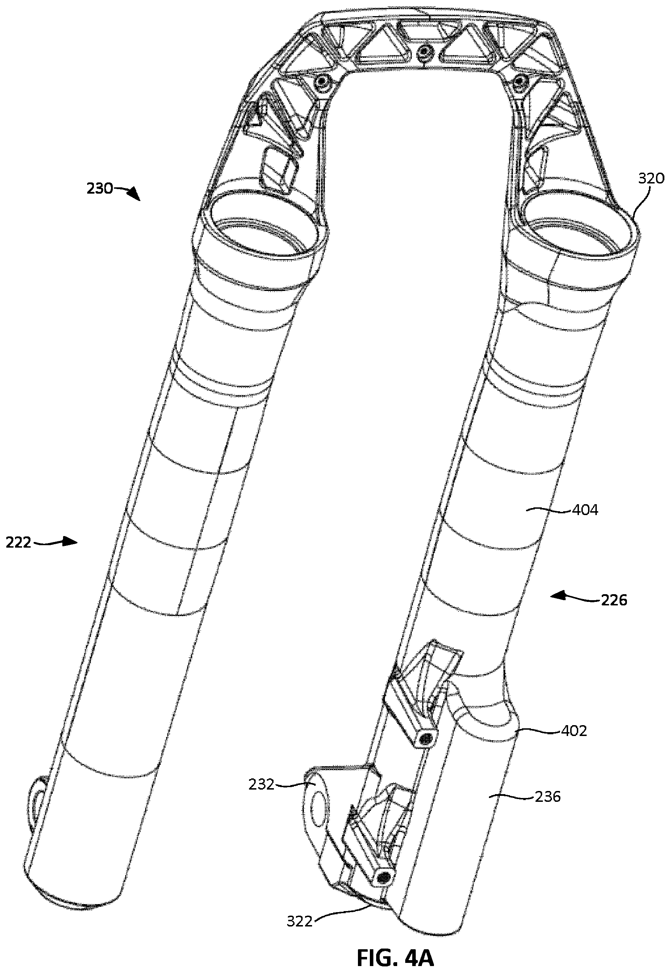

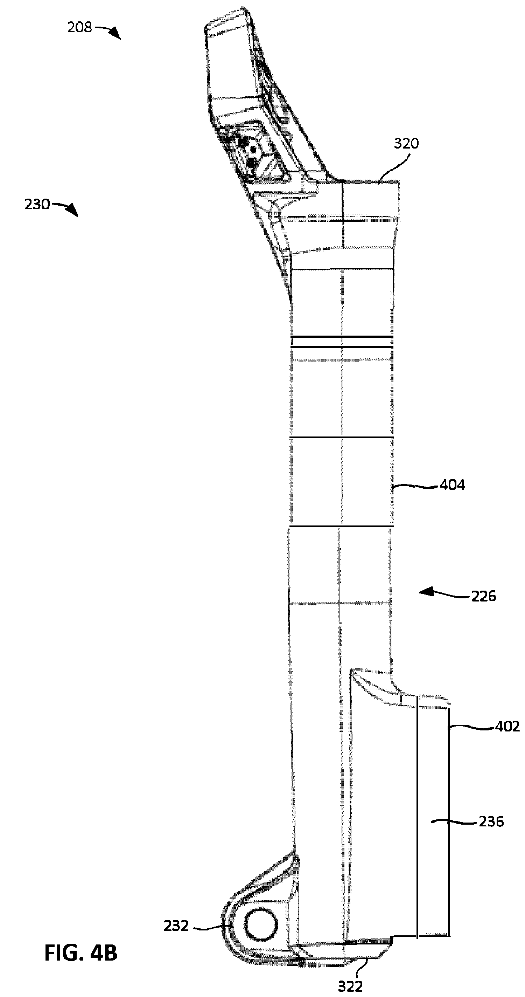

To mitigate or reduce the casting ramp spring effect noted above, the lower housing 230 of the front fork 200 of the illustrated example includes the housing 236 (shown in FIG. 2). Specifically, the housing 236 of the illustrated example increases a volume capacity (e.g., volume of air capacity) of the second lower tube 226 (e.g., the interior region 326) of the front fork 200. Expanding the volume capacity of the second lower tube 226 reduces instances of pressure increases or pressure spikes in the interior region 326 (FIGS. 3A and 3B) during compression cycle. The housing 236 provides an additional or increased volume capacity of the front fork to reduce (e.g., minimize) an amount of pressure increase during a compression cycle of the front fork 200 (e.g., compared to a front fork without the additional volume capacity provided by the housing 236). The housing 236 of the second leg 214 is described in greater detail in connection with FIGS. 4A, 4B, 5A and 5B. While the housing 236 is described in connection with the second lower tube 226, which is part of the leg with the spring 204, the front fork 200 may include a similar housing on the first lower tube 224 that is part of the leg with the damper 202. Therefore, any of the example aspects discussed in connection with the housing 236 can likewise apply to an housing on the first lower tube 224.

FIG. 4A is a perspective view of the example lower housing 230 of the example front fork 200 of FIGS. 1-3. FIG. 4B is a side view of the example lower housing 230 of FIG. 4A. The housing 236 of the illustrated example may be considered a blister or enlarged area on the second lower tube 226. The housing 236 of the illustrated example is provided at or near (e.g., adjacent) the bottom end 322 of the second lower tube 224. Specifically, the housing 236 extends (e.g., vertically) from adjacent the bottom end 322 towards the top end 320. The housing 236 of the illustrated example includes a wall 402 that extends or projects from an outer surface 404 (e.g., an exterior surface) of the lower housing 230 and/or the second lower tube 226. In particular, the housing 236 can project from a side surface, a rear surface and/or any other surface of the second lower tube 226. In the illustrated example, the wall 402 projects from a portion of the outer surface 404 that is opposite to the mounting flange 232 of the lower housing 230. In some examples, the housing 236 increases a volume of the second lower tube 226 and/or the interior region 326 of the second lower tube 226 by between approximately 1 percent and 200 percent (e.g., 20 percent). The wall 402 of the illustrated example has a cylindrical shape or profile. However, in some examples, the wall 402 can have a rectangular shape, a square shape, and/or any other shape. The wall 402 of the illustrated example is a unitary structure or wall defining an enclosure.

The housing 236 of the illustrated example is integrally formed with and/or fabricated with the lower housing 230. Specifically, the housing 236 is integrally formed with the second lower tube 226. Thus, the housing 236 and the lower housing 230 are a unitary, single, or monolithic body. In some examples, the housing 236 can be integrally formed with the lower housing 230 via casting, three-dimensional printing, and/or any other manufacturing process(es) and/or technique(s). The lower housing 230 of the illustrated example can be constructed of aluminum, steel, titanium, carbon fiber, plastic, and/or any other metals, alloys and/or material(s) and/or combinations thereof.

FIG. 5A is a cross-sectional view of the example lower housing 230 of FIG. 4B. FIG. 5B is a partial, enlarged view of the callout of FIG. 5A. The housing 236 (e.g., the wall 402) of the illustrated example defines an interior region 502 (e.g., a second interior region). The housing 236 of the illustrated example includes an access opening 504 that provides access to the interior region 502. In other words, the wall 402 has an opened end (e.g., adjacent to the bottom end 322 of the second lower tube 226). In some examples, the access opening 504 of the illustrated example is the only external access or opening provided to the interior region 502. The access opening 504 has a longitudinal axis 506 (e.g., a central axis) that is non-perpendicular relative to the center axis 324 (FIGS. 3A and 3B) of the second leg 214 and/or the second lower tube 226). In the illustrated example, the longitudinal axis 506 is substantially parallel relative to the center axis 324. As used herein, substantially parallel means parallel or within 1 degree and 10 degrees (e.g., 5 degrees) of parallel.

The interior region 502 and/or the access opening 504 has a cylindrical or circular shape. Specifically, the interior region 502 has a diameter 508 and a length 510 defining a volume capacity (e.g., a volume of air capacity) of the housing 236 and/or the interior region 502. In the illustrated example, the diameter 508 is constant (e.g., non-varying) along the length 510 of the wall 402. In some examples, the diameter 508 of an inner wall defining the interior region 502 and/or the wall 402 can vary (e.g., increase or decrease) along the length 510 of the housing 236. In the illustrated example, the diameter 508 can be between approximately 5 millimeters (mm) +/- 2 mm and 50 mm +/-5 mm, and the length 510 can be between approximately 40 mm +/- 5 mm and 250 mm +/- 20 mm. The diameter 508 and/or the length 510 of the housing 236 can be less than and/or greater than (e.g., outside of) the example ranges provided above to vary (e.g., increase or decrease) the volume capacity of the housing 236 as needed. In some examples, the wall 402, the interior region 502 and/or housing 236 can have any other shape including, for example, a square shape, a rectangular shape, etc.

As noted above, the housing 236 protrudes from the outer surface 404 of the second leg 214. Specifically, at least a portion 512 of the second leg 214 is positioned between the interior region 326 of the second lower tube 226 and the interior region 502 of the housing 236. Thus, the portion 512 of the second lower tube 226 separates the interior region 326 of the second lower tube 226 and the interior region 502 of the housing 236. To fluidly couple the interior region 326 of the second lower tube 226 and/or the second leg 214 and the interior region 502 of the housing 236, the lower housing 230 of the illustrated example includes one or more flow channels or flow pathways 514 (e.g., a flow path). The flow pathways 514 extend through the portion 512 of the second lower tube 526. Thus, the flow pathways 514 are formed between the housing 236 and the interior region 326 of the second lower tube 224. Thus, referring to FIGS. 5A and 5B, the housing 236 of the illustrated example is fluidly coupled with the interior region 326 of the second leg 214 via the flow pathways 514. Specifically, the flow pathways 514 enable fluid flow between the interior region 326 of the second leg 214 and the interior region 502 of the housing 236 (e.g., during a compression cycle and/or an extension cycle of the spring 204 (FIG. 2)). Thus, the interior region 326 (e.g., a first cavity) of the second leg 214 and the interior region 502 (e.g., a second cavity) of the housing 236 define a total casting volume or a sealed residual air space (e.g., a total sealed residual air space provided by the interior regions 326 and 502) of the second leg 214 of the front fork suspension 200. A first cross sectional area of the sealed residual air space taken perpendicular to the axis 324 at a first location 511 (e.g., including the interior region 326 of the second lower tube 226 and the interior region 502 of the housing 236) adjacent the second end 322 of the second lower tube 226 is larger than a second cross sectional area of the sealed residual air space interior region of the second lower tube 226 taken perpendicular to the axis 324 at a second location 513 (e.g., including only the interior region 326 of the second lower tube 226) adjacent the first end 320 of the second lower tube 226. In some examples, the first location 511 is below the first bushing 385 and the second location 513 is above the first bushing 385. In some such examples, a first cross sectional area of the sealed residual air space taken perpendicular to the axis 324 at the first location 511 of the second lower tube 226 below the first bushing 385 is larger than a second cross sectional area of the sealed residual air space of the second lower tube 226 taken perpendicular to the axis 324 at the second location 513 above the first bushing 385 (e.g., a location between the first bushing 385 and the second bushing 387 of FIG. 3B).In some examples, the first location 511 is below a midpoint of a vertical length of the second lower tube 226 and the second location 513 is above the midpoint of the vertical length of the second lower tube 226.

The flow pathways 514 of the illustrated example can be formed via a secondary manufacturing process including, but not limited to, drilling, etc. For example, a tool (e.g., a drill) can be inserted into the interior region 502 from the access opening 504 and the flow pathways 514 can be formed by drilling one or more holes through the portion 512 of the second lower tube 226 from the outer surface 404 to an inner surface 516 of the second lower tube 226. In some examples, the flow pathways 514 can be integrally formed with the lower housing 230 via casting, three-dimensional printing, and/or any other manufacturing process(es) or techniques.

The access opening 504 of the housing 236 includes threads 518 to threadably receive a cap (e.g., a threaded fastener). In other examples, the access opening 504 does not include threads. Additionally, the access opening 504 includes a counterbore 520 to define a stepped shoulder 522 that provides a stop. The counterbore 520 includes a diameter that is greater than the diameter 508 of the interior region 502.

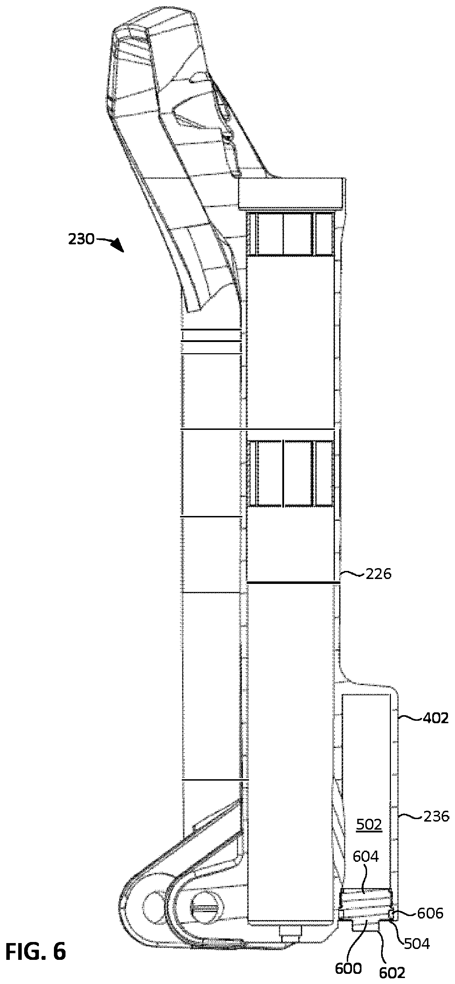

FIG. 6 is a cross-sectional view of the example lower housing of FIG. 5A shown with an example cap 600, which may also be referred to as a plug, and which seals seal the access opening 504. The cap 600 illustrated is a threaded cap that screws into and threadably couples to the access opening 504 of the housing 236. The cap 600 of the illustrated example includes a cylindrical body 602 having threads and a protrusion 604 that can be engaged by a tool and/or a user to couple the cap 600 and the housing 236. The cap 600 of the illustrated example engages the shoulder 522 to prevent further insertion of the cap 600 into the interior region 502.

Additionally, the cap 600 can include a seal 606 (e.g., an O-ring) to provide a fluid tight closure and prevent fluid (e.g., air) from leaking between the interior region 502 and the environment via the access opening 504. Thus, the housing 236 is sealed from the environment and provides an extension of the interior region 326 of the second lower tube 226. In other words, the interior regions 326, 502 define a volume capacity of the second lower tube 226 and/or the second leg 214.

In some examples, adhesive, tape, and/or any other chemical fastener can be employed to couple the cap 600 and the housing 236. In some examples, the cap 600 can be a non-threaded cap or plug that couples to the housing 236 via an interference connection, a press-fit connection, welding, adhesive, thermoplastic welding, and/or other chemical fastener(s) and/or technique(s). In the illustrated example, the cap 600 is removably coupled to the housing 236. As used herein, "removably coupled" means that the cap 600 can be removed without causing damage or deformation to the housing 236, the wall 402 and/or the second lower tube 226. In some examples, the cap 600 can be permanently coupled to the housing 236. As used herein, "permanently coupled" means that the fastener 600 cannot be removed from the housing 236 without causing damage or destruction to the housing 236, the cap 600 and/or the second lower tube 226. In some examples, the cap 600 can be metal, plastic, carbon fiber, an alloy, and/or any other material(s). In some examples, the cap 600 and the housing 236 can be made of the same material(s). In some examples, the cap 600 and the housing 236 can be made of dissimilar materials.

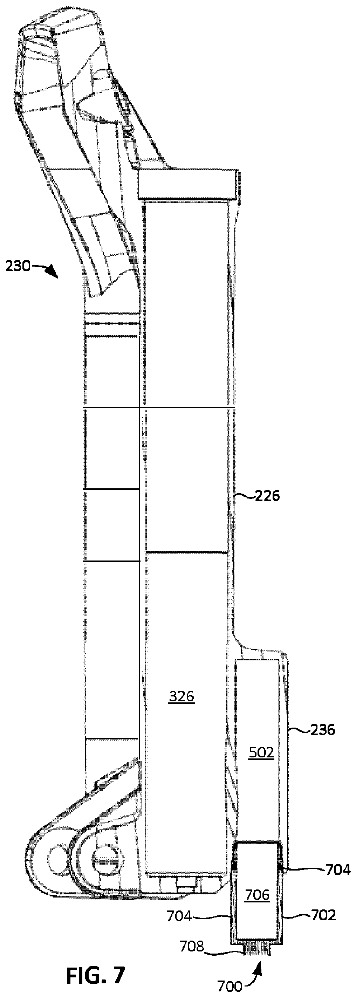

FIG. 7 is a cross-sectional view of the example lower housing of FIGS. 4A, 4B, 5A and 5B shown with yet another example cap 700 disclosed herein. The cap 700 of the illustrated example provides an extension cavity 702 for the housing 236 of the second lower tube 226 and/or the second leg 214 (e.g., to increase a volume capacity of the internal region 502). For example, the cap 700 of the illustrated example includes a cylindrical body 704 defining an interior region 706. The cylindrical body 704 includes a threaded end to threadably couples to the access opening 504 of the housing 236 and protrudes from the housing 236 in a direction away from the access opening 504. The interior region 706 of the cap 700 is in fluid communication with the interior region 502 of the housing 236 when coupled to the housing 236. In this manner, the interior region 706 extends or increases a volume of the interior region 502 and, thus, a volume of the housing 236. In other words, the extension chamber 702 is in fluid communication with the housing 236. As a result, the interior region 706 can receive and/or take-up fluid during operation of the spring 204 (e.g., a compression cycle of the spring 204). In the illustrated example, the interior region 326 of the second lower tube 226, the interior region 502 of the housing 236 and the interior region 706 of the extension chamber 702 are in fluid communication to define or provide a volume capacity or a sealed residual air space(e.g., a total casting volume capacity) of the second leg 214 and/or the second lower tube 226. Additionally, the cap 700 can include a seal 708 (e.g., an O-ring) to provide a fluid tight closure and prevent fluid (e.g., air) from leaking between the interior regions 502, 706 and the environment via the access opening 504 (e.g., while providing an extension of the interior region 326 of the second lower tube 226). Thus, the housing 236, the extension chamber 702 and the interior region 326 of the second lower tube 226 are sealed from the environment. Thus, the interior region 326, the interior region 502 and the interior region 706 collectively provide a total sealed residual air space or total casting volume. In other words, the interior region 326, the housing 236 and/or the extension chamber 702 increase a casting volume of the second lower tube 226 that would otherwise be provided by the interior region 326 of the second lower tube 226. The cap 700 of the illustrated includes a protrusion 710 that can be engaged by a tool and/or a user to couple the cap 700 and the housing 236.

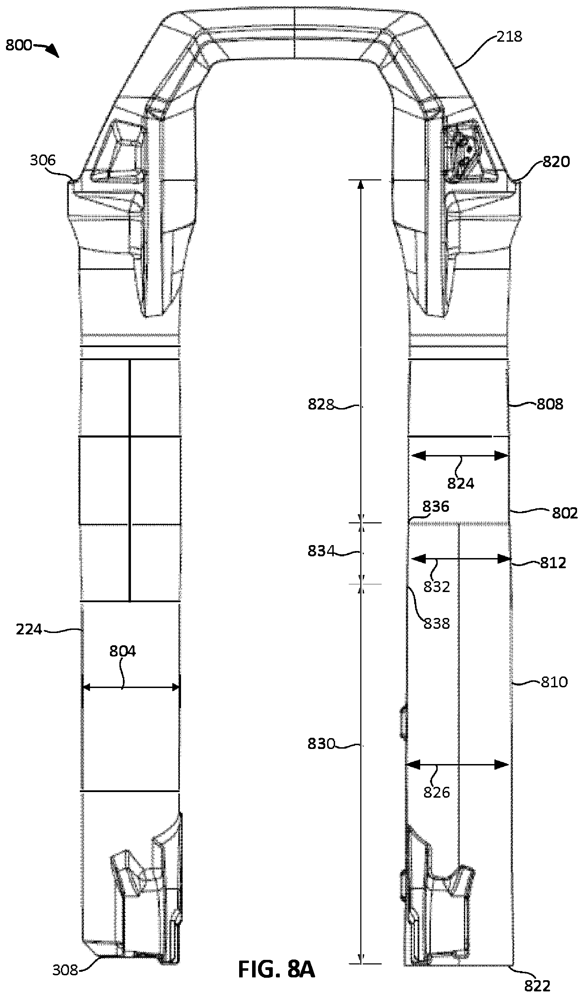

FIGS. 8A-8C, 9A, 9B, 10A-10C, 11A, 11B and 12 illustrate other example lower housings 800, 1000, 1200 disclosed herein. Many of the components of the example lower housings 800, 1000, 1200 of FIGS. 8A-8C, 9A, 9B, 10A-10C, 11A, 11B and 12 are substantially similar or identical to the components described above in connection with FIGS. 1-3, 4A, 4B, 5A, 5B, 6 and 7. As such, those components will not be described in detail again below. Instead, the interested reader is referred to the above corresponding descriptions for a complete written description of the structure and operation of such components. To facilitate this process, similar or identical reference numbers will be used for like structures in FIGS. 8A-8C, 9A, 9B, 10A-10C, 11A, 11B and 12 as used in FIGS. 1-3, 4A, 4B, 5A, 5B, 6 and 7. The lower housings 800, 1000, 1200 of FIGS8A-8C, 9A, 9B, 10A-10C, 11A, 11B and 12 can be implemented on the front fork 108 of FIG. 1 and/or the front fork 200 of FIGS. 2-3. For example, any of the example lower housings 800, 1000, 1200 can be used in place of the lower housing 230 of FIGS. 2-3.

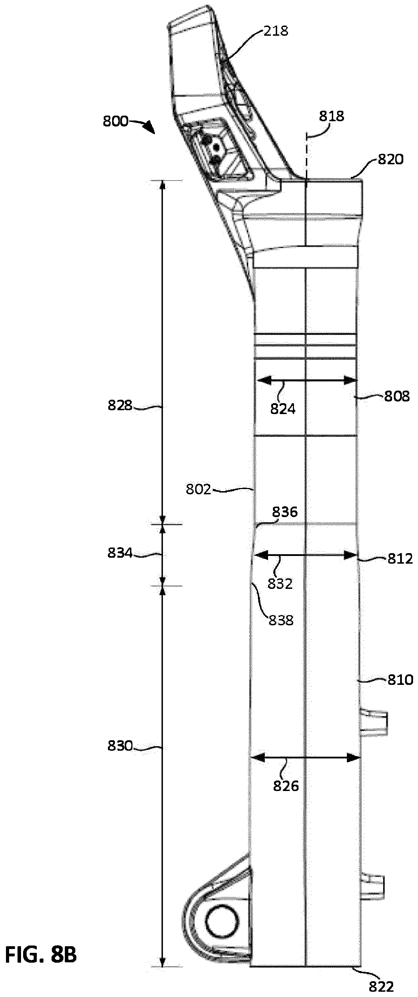

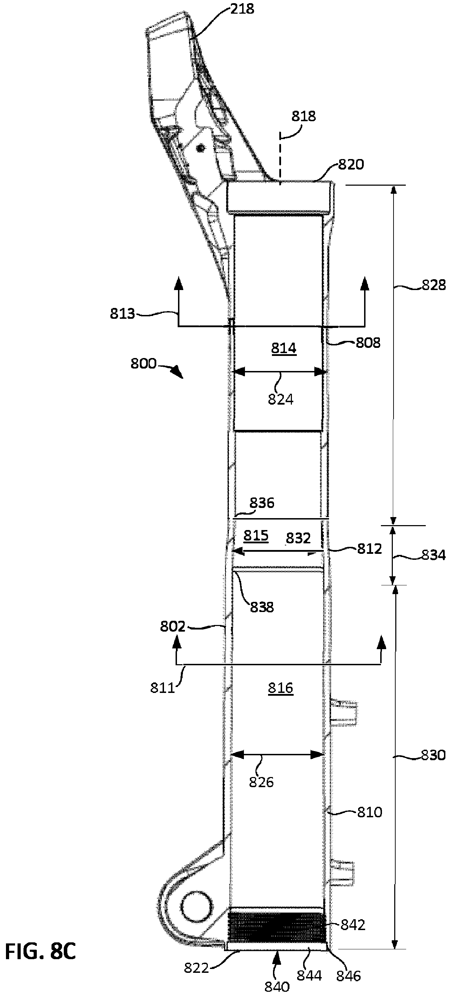

FIG. 8A is a front view of another example lower housing 800 that can be implemented on the front fork 108 of the example bicycle of FIG. 1. In some examples, the lower housing 800 of FIG. 8A can be used with the front fork 200 of FIGS. 2-4, 5A and 5B instead of the lower housing 230. FIG. 8B is a side view of the example lower housing 800 of FIG. 8A. FIG. 8C is a cross-sectional view of the example lower housing 800 of FIG. 8B.

The lower housing 800 of the illustrated example includes a first lower tube 224, a second lower tube 802 and an arch 238 coupling the first lower tube 224 and the second lower tube 802. The first and second lower tubes 224, 802 of the illustrated example are configured to slidably receive the respective first and second upper tubes 220, 222 of FIGS. 2-3. For example, the first lower tube 224 can slidably receive the first upper tube 220 to provide a damper 202 (FIG. 2) and the second lower tube 802 can slidably receive the second upper tube 222 to provide a spring 204 (FIG. 2).

The first lower tube 224 is substantially similar or identical relative to the first lower tube 224 of FIGS. 2 and 3. The first lower tube 224 of the illustrated example includes a first diameter 804. The first diameter 804 of the illustrated example is substantially uniform (e.g., constant, or non-tapered) along a length 806 of the first lower tube 224 between a top end 306 of the first lower tube 224 and a bottom end 308 of the first lower tube 224.

The second lower tube 802 includes a first portion 808 (e.g., an upper portion), a second portion 810 (e.g., a lower portion) and a third portion 812, referred to herein as a transition portion 812, between the first portion 808 and the second portion 810. The first portion 808 extends between a top end 820 of the second lower tube 802 and the transition portion 812, and the second portion 810 extends between the transition portion 812 and a bottom end 822 of the second lower tube 802. The first portion 808 of the second lower tube 802 defines a first internal region 814 (e.g., area) (FIG. 8C), the second portion 810 of the second lower tube 802 defines a second interior region 816 (e.g., area) (FIG. 8C), and the third portion 812 defines a third internal region 815. The first internal region 814, the second internal region 816 and the third internal region 815 collectively define a volume capacity and/or a sealed residual air space (e.g. a total casting volume capacity) of the second lower tube 802. The first internal region 814 is to receive the second upper tube 222 (FIG. 3A). The second interior region 816 defines at least a portion of casting volume when the fork is assembled. In some examples, the second interior region 816 provides a volume that is greater than a volume of the first internal region 814 of the second lower tube 802. In the illustrated example, the second interior region 816 increases a casting volume of the second lower tube 802.

As shown in FIGS. 8A-8C, the second portion 810 of the second lower tube 802 flares (e.g., expands, enlarges) outwardly relative to the first portion 808 about a longitudinal axis 818 of the second lower tube 802 (e.g., to increase a volume capacity). For example, the second portion 810 of the second lower tube 802 flares outwardly radially or circumferentially relative to the first portion 808 about the longitudinal axis 818 of the second lower tube 802. The second lower tube 802 of the illustrated example has a varying diameter between the top end 820 of the second lower tube 802 and the bottom end 822 of the second lower tube 802 opposite the first end 820. Specifically, the first portion 808 has a first diameter 824 (e.g., a first inner diameter) and the second portion 810 has a second diameter 826 (e.g., a second inner diameter), which is greater than the first diameter 824. In the illustrated example, the first diameter 824 is constant along a first length 828 of the first portion 808. In the illustrated example, the second diameter 826 is constant along a second length 830 of the second portion 810. To transition between the first portion 808 and the second portion 810, the transition portion 812 of the illustrated example has a third diameter 832 (e.g., a third inner diameter) that varies (e.g., increases) along a third length 834 between a first end 836 of the transition portion 812 adjacent the first portion 808 and a second end 838 of the transition portion 812 adjacent the second portion 810. Thus, the transition portion 812 of the illustrated example has a tapered profile having a diameter that that varies between the first diameter 824 and the second diameter 826.

Thus, a first cross sectional area of the sealed residual air space (e.g., defined by the first internal region 814, the second internal region 816, and the third internal region 815) of the second lower tube 802 taken perpendicular to the axis 818 at a first location 811 (e.g., including the interior region 816) adjacent the second end 822 of the second lower tube 802 is larger than a second cross sectional area of the sealed residual air space interior region of the second lower tube 802 taken perpendicular to the axis 818 at a second location 816 (e.g., including the first interior region 814) adjacent the first end 820 of the second lower tube 802. In some examples, the first location 813 is below the first bushing 385 (FIG., 3B) and the second location 813 is above the first bushing 385 (FIG. 3B). In some such examples, a first cross sectional area of the sealed residual air space taken perpendicular to the axis 818 at the first location 811 of the second lower tube 802 below the first bushing 385 is larger than a second cross sectional area of the sealed residual air space of the second lower tube 802 taken perpendicular to the axis 324 at the second location 813 above the first bushing 385 (e.g., a location between the first bushing 385 and the second bushing 387 of FIG. 3B). In some examples, the first location 811 is below a midpoint of a vertical length of the second lower tube 802 and the second location 813 is above the midpoint of the vertical length of the second lower tube 802.

Referring to FIG. 8C, the lower housing 800 and/or the second lower tube 802 of the illustrated example includes an opening 840 at the bottom end 822 of the second portion 810. The opening 840 provides access to the second interior region 816. In the illustrated example, the opening 840 has a same (or larger) inner diameter as the second diameter 826. In this example, the opening 840 includes threads 842, which can be used to receive a threaded cap or plug. The opening 840 includes a counterbore 844 that forms a step or shoulder 846 to provide a stop. The opening 840 of the illustrated example aligns (e.g., coaxially aligns) with the longitudinal axis 818 of the second lower tube 802.

In some examples, the lower housing 800 is constructed via a casting process. In some examples, the flared or tapered profile of the second lower tube 802 is formed during the casting process by using two core pins. A first core pin is inserted from the top end 820 and the second core pin is inserted from the bottom end 822. The first core pin may be straight and only forms the first portion 808, while the second core pin is tapered and forms the second portion 810 and the transition position 812. As a result, the opening 840 in the bottom end 822 has a same (or larger) inner diameter as the second portion 810. In some examples, this makes it easier to access a lower bushing during assembly, maintenance, and/or cleaning. For example, the second lower tube 802 may contain an upper bushing close to the top end 820 and a lower bushing that is below the upper bushing. In known forks, the lower tube is constructed from a single core pin, so the inner diameter of the lower tube is constant. The only way to access the lower bushing is from the top end 820, so the upper bushing has to be removed first. However, with the example design shown in FIGS. 8A-8C, the opening 840 (e.g., a larger sized opening) in the bottom end 822 enables a user to access the lower bushing through the bottom end 822, independently of accessing the upper bushing from the top end 820.

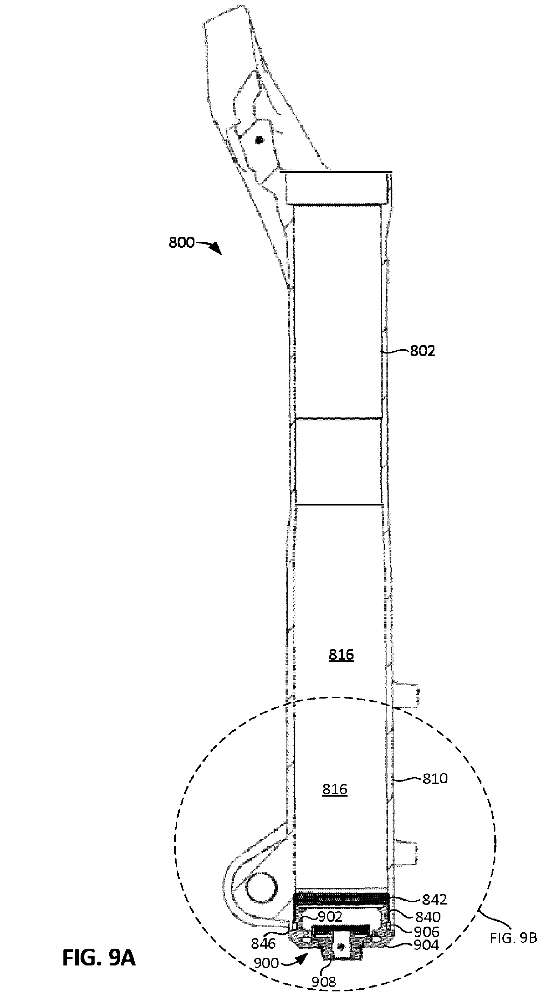

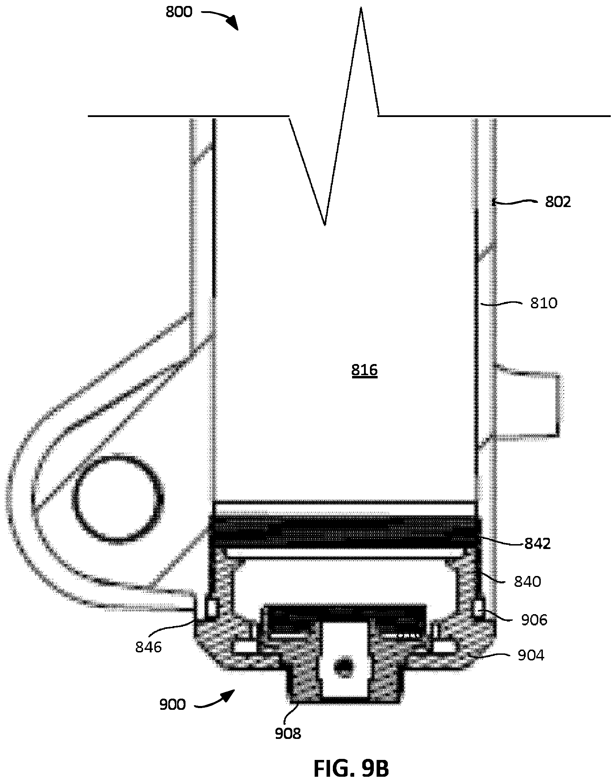

FIG. 9A is a cross-sectional side view of the example lower housing 800 of FIG. 8C shown with an example cap 900, which is removably coupled to the second lower tube 802. FIG. 9B is an enlarged partial view of the example lower housing 800 of FIG. 9A. The cap 900 includes a body or shank 902 having threads to threadably engage the threads 842 in the opening 840 and a head 904 that engages the shoulder 846, which limits further rotation and/or insertion of the cap 900 in a direction toward the second interior region 816 when the cap 900 engages the shoulder 846. In some examples, a seal 906 (e.g., an O-ring) is clamped between the cap 900 and the second lower tube 802 to provide a fluid tight closure and prevent fluid (e.g., air) from leaking between the second interior region 816 of the second portion 810 of the second lower tube 802 and the environment via the opening 840.

The cap 900 of the illustrated example includes a valve 908. The valve 908 of the illustrated example is movable or positionable between a closed position to prevent fluid flow (e.g., air flow) between the second interior region 816 and the environment and an open position to enable fluid flow (e.g., air flow) between the second interior region 816 and the environment. The valve 908 of the illustrated example is formed with the cap 900. Thus, the valve 908 provides a fluid passageway between an exterior of the cap 900 and an interior of the cap 900, which is in fluid communication with the second interior region 816. Thus, a flow path is formed between the volume of air in the second lower tube 802 and the valve 908 such that when the valve is in an open position, pressure in the second interior region 816 of the second lower tube 802 is equalized with atmospheric pressure. The valve 908 can be a Schrader valve, a poppet valve, a spring-loaded relief valve, a check valve, and/or any other valve.

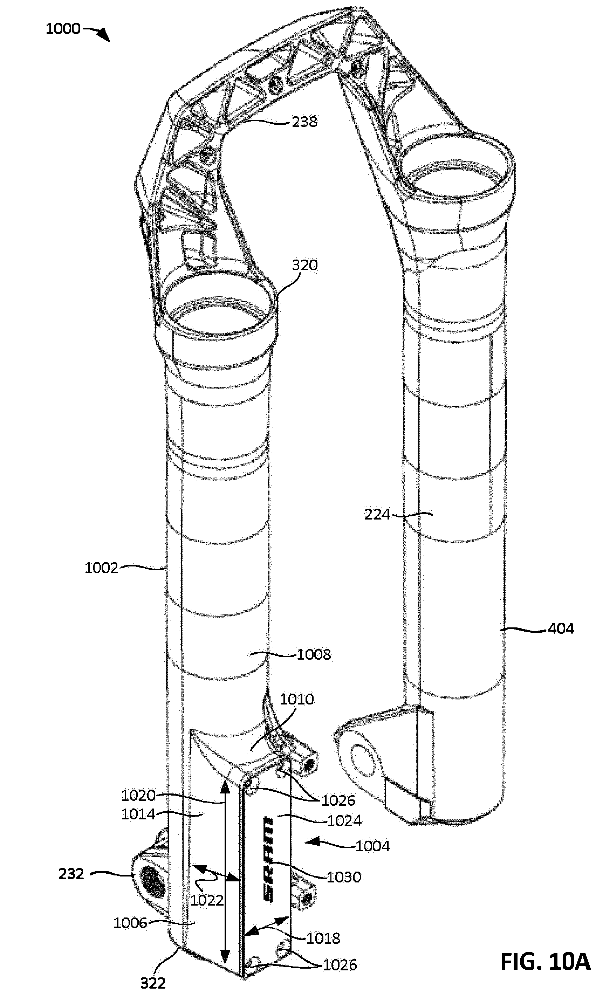

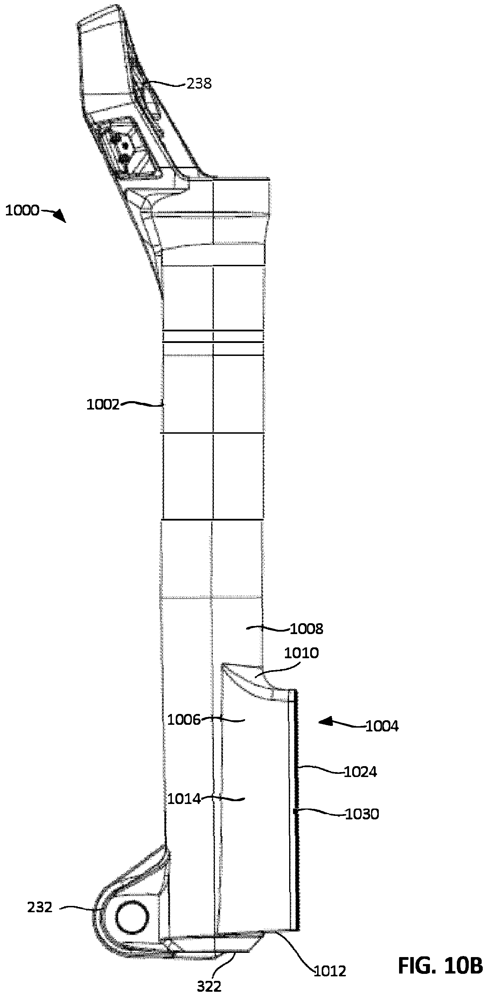

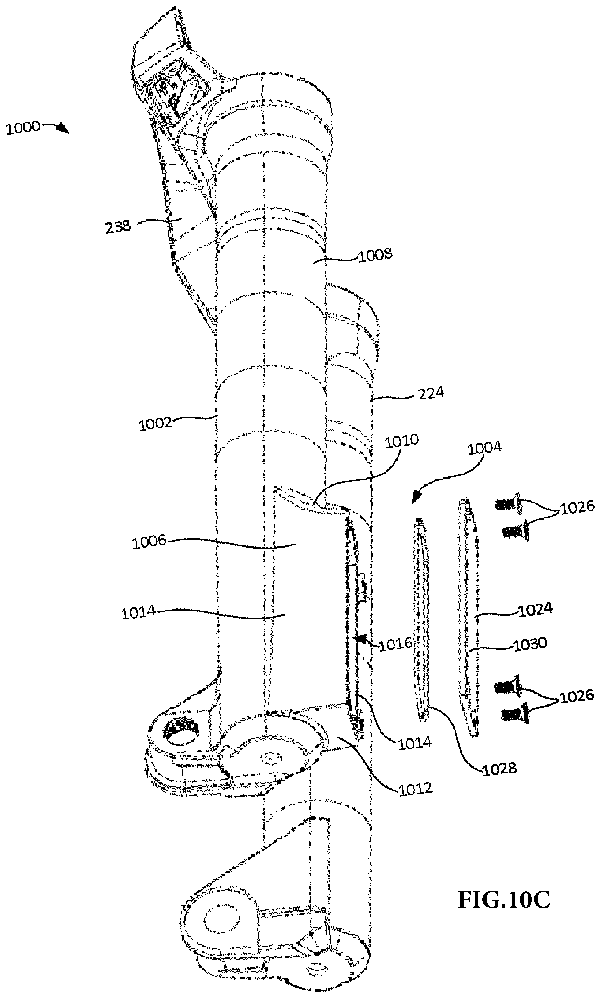

FIG. 10A is a perspective view of another example lower housing 1000 disclosed herein that can be implemented on the front fork 108 of the example bicycle of FIG. 1. In some examples, the lower housing 1000 of FIG. 10A can be used with the front fork 200 of FIGS. 2-3 instead of the lower housing 230. FIG. 10B is a side view of the example lower housing 1000 of FIG. 8A. FIG. 10C is an exploded view of the example lower housing 1000 of FIG. 10B.

Referring to FIGS. 10A-10C, the example lower housing 1000 includes a first lower tube 224, a second lower tube 1002 and an arch 228 coupling the first lower tube 224 and the second lower tube 1002. The first and second lower tubes 224, 1002 of the illustrated example are configured to slidably receive the respective first and second upper tubes 220, 222 of FIGS. 2-3A. For example, the first lower tube 224 can slidably receive the first upper tube 220 (FIG. 3A) to provide a damper 202 (FIG. 3A) and the second lower tube 1002 can slidably receive the second upper tube 222 (FIG. 3A) to provide a spring 204 (FIG. 3A).

To mitigate or reduce a casting ramp spring effect of the spring 204 and/or the second lower tube 1002, the lower housing 1000 of the illustrated example includes a housing 1004 (e.g., a body, protrusion, plurality of walls, a cavity, a container, etc.). Specifically, the housing 1004 of the illustrated example increases a volume capacity (e.g., a casting volume) of the second lower tube 1002. In some examples, the housing 1004 can increase a volume of the second lower tube 1002 (e.g., an interior region) of the second lower tube 1002 by between approximately 1 percent and 200 percent (e.g., 100 percent). Expanding the volume capacity of the second lower tube 1002 reduces instances of pressure increases or pressure spikes in the second lower tube 1002 during a compression cycle of the spring 204 when compared to a suspension system absent the housing 1004. In other words, the second lower tube 1002 and the housing 1004 define a casting volume (e.g., a total casting volume or sealed residual air space) of the second lower tube 1002 and/or the lower housing 1000.

The housing 1004 of the illustrated example is a blister or expanded cavity area that is provided on the second lower tube 1002. Specifically, the housing 1004 of the illustrated example is a wall 1006 that extends or protrudes from an exterior or outer surface 1008 of the lower housing 1000 and/or the second lower tube 1002. In particular, the housing 1004 can project from a side surface, a rear surface and/or any other surface of the second lower tube 1002. The wall 1006 projects from a portion of the outer surface 1008 that is opposite to a mounting fitting or flange 232 that couples to the frame 102 of the bicycle 100 of FIG. 1.

The wall 1006 of the illustrated example has a rectangular shape or profile. However, in other examples, the wall 1006 can a have a cylindrical shape, a square shape, and/or any other suitable shape(s) or profile(s). The housing 1004 of the illustrated example is integrally formed with and/or fabricated with the lower housing 1000. Thus, the housing 1004 and the lower housing 1000 are a unitary, single, or monolithic body. In some examples, the housing 1004 can be integrally formed with the lower housing 1000 via casting, three-dimensional printing, and/or any other manufacturing process(es) and/or technique(s). The lower housing 1000 and/or the housing 1004 of the illustrated example can include aluminum, steel, titanium, carbon fiber, plastic, and/or any other metals, alloys and/or material(s) and/or combinations thereof.

The housing 1004 has a first or upper surface 1010, a second or lower surface 1012, and side walls 1014. The first surface 1010 is oriented toward a top end 320 of the second lower tube 1002 and the second surface 1012 is oriented toward a bottom end 322 of the second lower tube 1002 opposite the top end 320. In other words, the first surface 1010 and the second surface 1012 are oriented non-parallel (e.g., orthogonal or perpendicular) relative to the outer surface 1008 and the side walls 1014 are oriented non-perpendicular (e.g., parallel) relative to the outer surface 1008.

The housing 1004 of the illustrated example includes an access opening 1016. The access opening 1016 of the housing 1002 has a width 1018 of approximately between 5 mm +/- 5 mm and 50 mm +/- 20 mm, a height 1020 of approximately between 40 mm +/- 5 mm and 250 mm +/- 20 mm, and a depth 1022 of approximately between 5 mm +/- 5mm and 50 mm +/- 5mm.

To cover or seal the access opening 1016, the housing 1004 of the illustrated example includes a cap or cover 1024. The cover 1024 of the illustrated example is a plate. The cover 1024 of the illustrated example has a rectangular shape. Additionally, the cover 1024 of the illustrated example is removably coupled to the housing 1004 via one or more fasteners 1026. In the illustrated example, the fasteners 1026 are screws. However, in other examples, the fasteners 1026 can be rivets, clips, and/or any other fastener(s). In some examples, the cover 1024 can be coupled to the housing 1004 via adhesive, interference fit, welding, thermoplastic welding, and/or any other suitable fastener(s). Additionally, the cover 1024 of the illustrated example includes a seal 1028 (e.g., a gasket, a rectangular seal) to provide a fluid tight closure and prevent fluid (e.g., air) from leaking between the access opening 1016 and the environment. It should also be appreciated that the cover 1024 and the seal 1028 may be incorporated into a single element. For example the cover 1024 and the seal 1028 may be a co-molded or other integrated configuration. In some examples, an outer surface 1030 of the cover 1024 can include indicia, characters, numbers and/or any other information or indicia. For example, the outer surface 1030 can include a company logo, an advertisement, a name, and/or any other indicia.

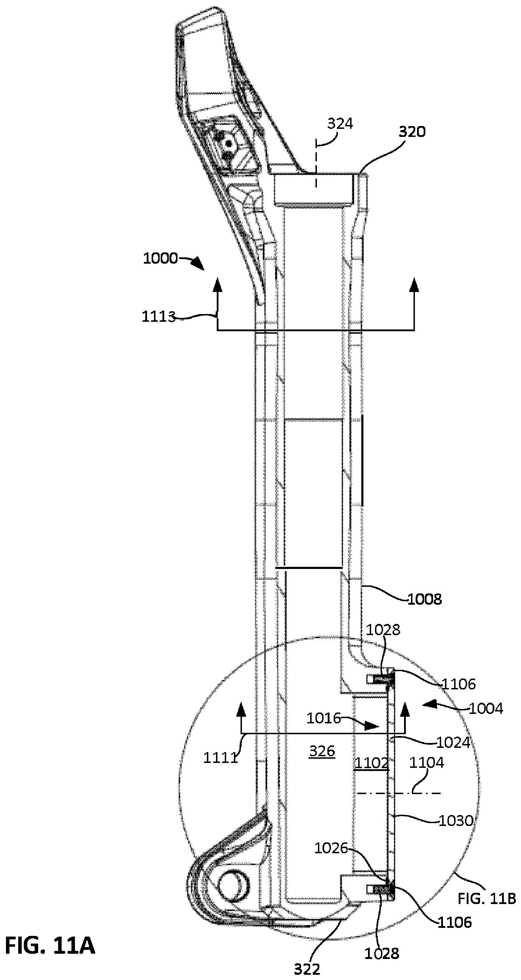

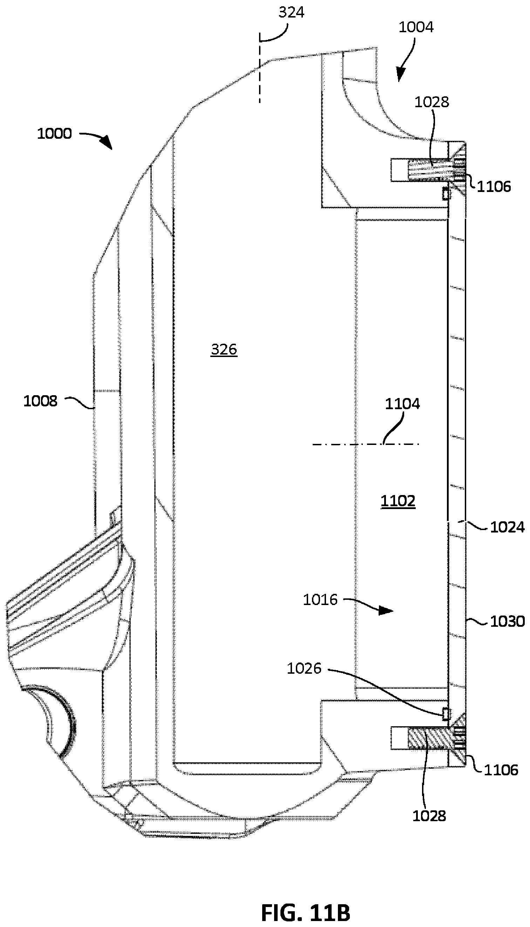

FIG. 11A is a cross-sectional view of the example lower housing 1000 of FIGS. 10A-10C. FIG. 11B is a partial, enlarged view of the example lower housing 1000 of FIG. 10A. As shown in FIGS. 11A and 11B, the housing 1004 defines an interior region 1102 (e.g., a cavity or space) that is in fluid communication with an interior region 326 of the second lower tube 1002. Therefore, the interior region 1102 is an extension of the interior region 326. For instance, the interior region 1102 and the interior region 326 collectively provide a total casting volume and/or a sealed residual air space of the lower housing 1000 and/or the second lower tube 1002. Thus, the interior region 326 (e.g., a first cavity) of the second lower leg 1002 and the interior region 1102 (e.g., a second cavity) of the housing 1004 define a total casting volume or a sealed residual air space (e.g., a total sealed residual air space provided by the interior regions 326 and 1102) of the second leg or the second lower tube 1002 of the front fork suspension 1000. For instance, a first cross sectional area of the sealed residual air space taken perpendicular to the axis 324 at a first location 1111 (e.g., including the interior region 326 of the second lower tube 1002 and the interior region 1102 of the housing 1004) adjacent the second end 322 of the second lower tube 1002 is larger than a second cross sectional area of the sealed residual air space of the interior region of the second lower tube 1002 taken perpendicular to the axis 324 at a second location 1113 (e.g., including only the interior region 326 of the second lower tube 1002) adjacent the first end 320 of the second lower tube 226. In some examples, the first location 1113 is below the first bushing 385 and the second location 1113 is above the first bushing 385. In some such examples, a first cross sectional area of the sealed residual air space taken perpendicular to the axis 324 at the first location 1111 of the second lower tube 1002 below the first bushing 385 is larger than a second cross sectional area of the sealed residual air space of the second lower tube 1002 taken perpendicular to the axis 324 at the second location 1113 above the first bushing 385 (e.g., a location between the first bushing 385 and the second bushing 387 of FIG. 3B). In some examples, the first location 1111 is below a midpoint of a vertical length of the second lower tube 1002 and the second location 1113 is above the midpoint of the vertical length of the second lower tube 1002.

The outer surface 1008 of the second lower tube 1002 does not extend through the access opening 1016. In other words, the interior region 1102 (e.g., fully, or entirely) opens up into the interior region 326 of the second lower tube 1002. The access opening 1016 provides access to the interior region 326 of the second lower tube 1002. Thus, the lower housing 1000 of the illustrated example does not need to undergo a secondary manufacturing process (e.g., drilling) to form channels between the interior region 326 of the second lower tube 1002 and the interior region 1102 the housing 1004. In some examples, the housing 1004 can increase a volume of the second lower tube 1002 and/or the interior region 326 of the second lower tube 1002 by between approximately 1 percent and 200 percent (e.g., 20 percent).

The access opening 1016 defines a longitudinal axis 1104 that is non-parallel (e.g., orthogonal or perpendicular) relative to a longitudinal or center axis 324 of the second lower tube 1002. For example, the access opening 1016 is substantially parallel relative to the outer surface 1008 of the second lower tube 1002. Additionally, the seal 1028 is positioned between the cover 1024 and the wall 1006 to seal the housing 1004 from the environment. The fasteners 1026 of the illustrated example are countersunk with the cover 1024 so respective heads 1106 of the fasteners 1026 are flush relative to the outer surface 1030 of the cover 1024.

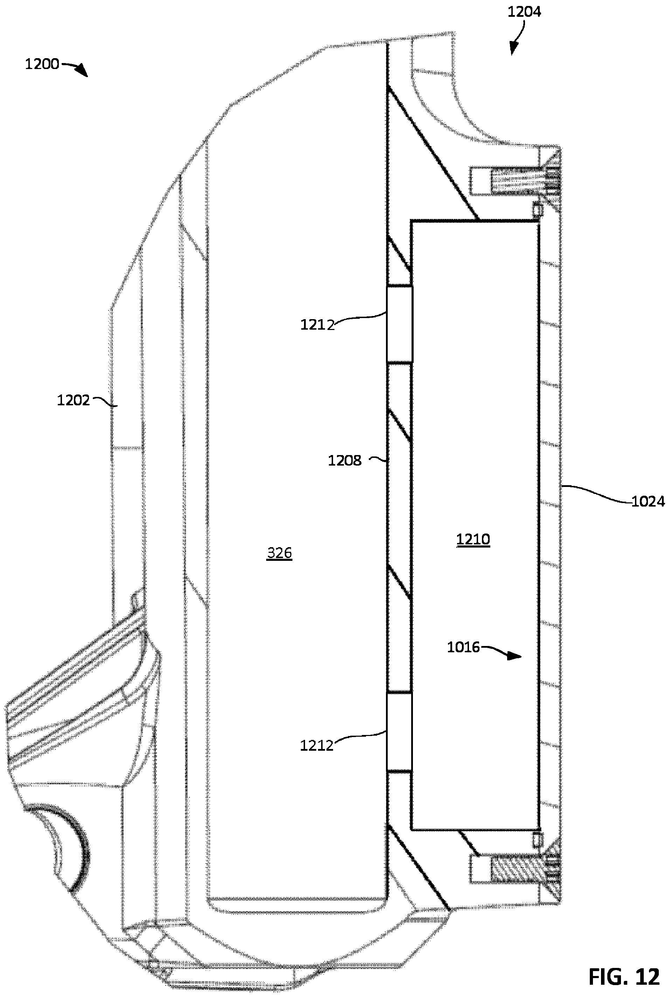

FIG. 12 is an enlarged, partial view of another example lower housing 1200 disclosed herein that can implement the front fork 108 of the example bicycle of FIG. 1. In some examples, the lower housing 1200 of FIG. 12 can be used with the front fork 200 of FIGS. 2-3 instead of the lower housing 230. The lower housing 1200 of the illustrated example includes a second lower tube 1202 having an example housing 1204. The housing 1204 of the illustrated example increases a casting volume of the lower housing 1200. In particular, the lower housing 1200 of the illustrated example is substantially similar to the lower housing 1000 of FIGS. 10A-10C and 11A-11B except that an outer surface or wall 1208 of a second lower tube 1202 is positioned between an interior region 326 of the second lower tube 1202 and an interior region 1210 of the housing 1204. Additionally, the lower housing 1200 of the illustrated example includes one or more flow channels 1212 to fluidly couple the interior region 326 of the second lower tube 1206 and the interior region 1210 of the housing 1204. The flow channels 1212 of the illustrated example can be formed via a secondary manufacturing process including, but not limited to, drilling, etc. For example, a tool (e.g., a drill) can be inserted into the interior region 1210 from an access opening 1016 (e.g., prior to attachment of a cover 1024 to the access opening 1016) and the flow channels 1212 can be provided (e.g., formed) through the wall 1208 (e.g., an outer wall) of the second lower tube 1202. In some examples, the flow channels 1212 can be integrally formed with the lower housing 1200 via casting, three-dimensional printing, and/or any other manufacturing process(es) or techniques.

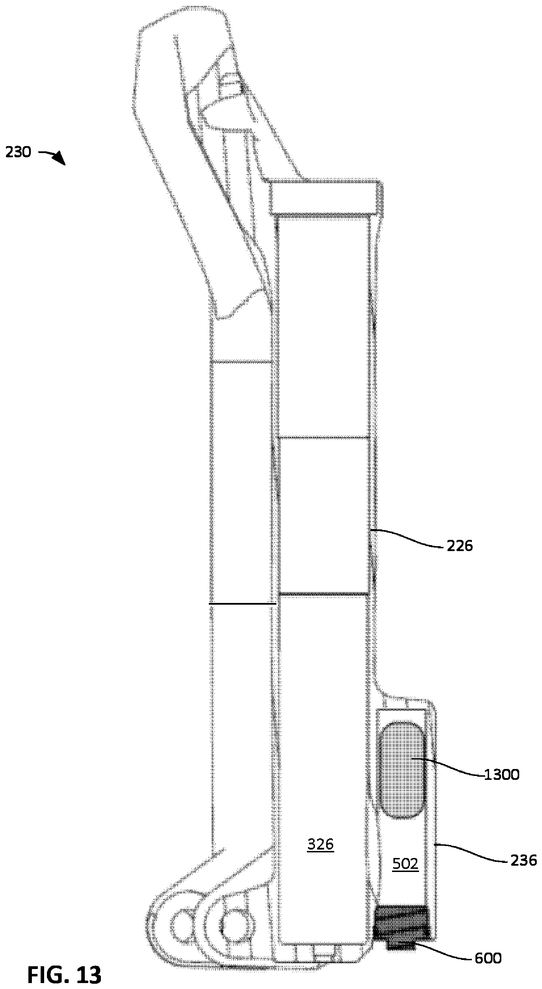

In some examples, a front fork can include a volume spacer to consume or take up air volume in the lower tube (i.e., the casting volume) to change or adjust a damping rate and/or an overall spring rate for higher or lower damping forces and/or spring forces. For example, FIG. 13 is a cross-sectional view of the second lower tube 226 with the housing 236 and the cap 600. In the example of FIG. 13, an example volume spacer 1300 is disposed in the interior region 502 of the housing 236. In some examples, the volume spacer 1300 is a solid piece or hollow piece of material (e.g., plastic, polymer, metal) that consumes or takes up a portion of the volume in the housing 236 and, thus, the interior region 326 of the second lower tube 226. This reduces the amount of air in the second lower tube 226, which increases the casting ramp spring effect. As such, this changes the effective spring rate to be more progressive (e.g., exhibit higher forces). In this example, the volume spacer 1300 is cylindrical in shape. In some examples, the volume spacer 1300 has a diameter that is the same as or close to the inner diameter of the housing 236 and forms a friction fit with the housing 236. In some examples, the volume spacer 1300 has a diameter of 30mm +/- 20mm, and a height of 30mm +/- 20mm. However, in other examples, the volume spacer 1300 can be larger or smaller and may be shaped differently. In some examples, multiple volume spacers can be stacked and/or nested together for greater heights. Multiple volume spacers can be mechanically interlocked with one another with threads or interference features.

In other examples, the volume spacer 1300 can function as a volume increaser to change the effective spring rate to be less progressive and therefore more linear (e.g., exhibit lower forces). For example, the volume spacer 1300 is constructed of activated carbon. Activated carbon has a relatively large surface area that causes gas molecules to adsorb to the material's surface (through van der Waals forces), which essentially allows more gas molecules into a volume than would normally occupy that volume. As such, the activated carbon acts to increase the volume in the housing 236 and, thus, in the second lower tube 226, and thereby change the effective spring rate to be less progressive.

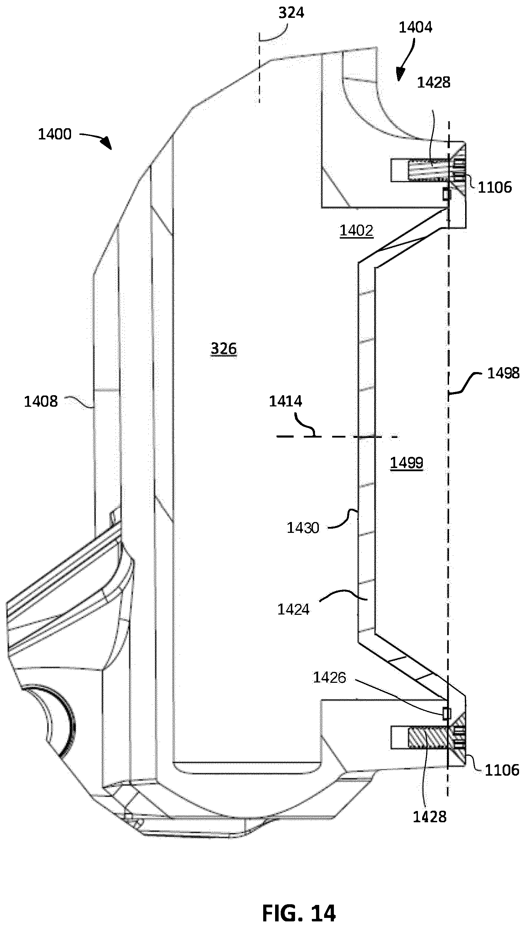

Turning now to FIG. 14, an enlarged, partial view of another example lower housing 1400 is provided. The lower housing 1400 of FIG. 14 can be implemented on the front fork 108 of the example bicycle of FIG. 1. In some examples, the lower housing 1400 of FIG. 14 may be used with the front fork 200 of FIGS. 2-3 instead of the lower housing 230. As shown in FIG. 14, the lower housing 1400 is defined at least in part by an outer wall 1408 and itself generally defines a lower housing axis or longitudinal axis 324. A housing 1404 is provided protruding from the lower housing 1400 generally along a housing axis 1414.

The housing 1404 of FIG. 14 is formed as an outer mounting portion on the lower housing 1400. Specifically, the housing 1404 provides facility for mounting one or more of a volume control element 1424 on a mounting plane 1498. The volume control element 1424 is sized and shaped to control a volume disposed within the housing, for example that volume disposed between the lower housing 1400 and a corresponding upper tube (not shown) as described elsewhere herein. An inner surface 1430 of the volume control element 1424 may be compared relative to the mounting plane 1498 to define one or more properties of the volume control element 1424. For example, an embodiment as shown in FIG. 14 where the inner surface 1430 of the volume control element 1424 is below the mounting plane 1498 (i.e. closer to the longitudinal axis 324), the volume control element 1424 may be described as decreasing a magnitude of the volume of the housing 1404 or otherwise a volume contained within the fork leg as shown in e.g. FIG. 3A. The magnitude of change in volume can be defined by a volume control element volume 1499. The volume control element volume 1499 is defined between the volume control element 1424 and the mounting plane 1498. In this embodiment, the volume control element volume 1499 is subtractive to a housing volume 1402, thus acting to decrease volume within the housing 1404. Various other embodiments of the volume control element 1424 may be provided to otherwise change the magnitude of this interior volume. A seal 1426, for example as described above with reference to FIG. 10C, may be configured to allow repeatable removability to facilitate interchangeability of various embodiments of the volume control element 1424.

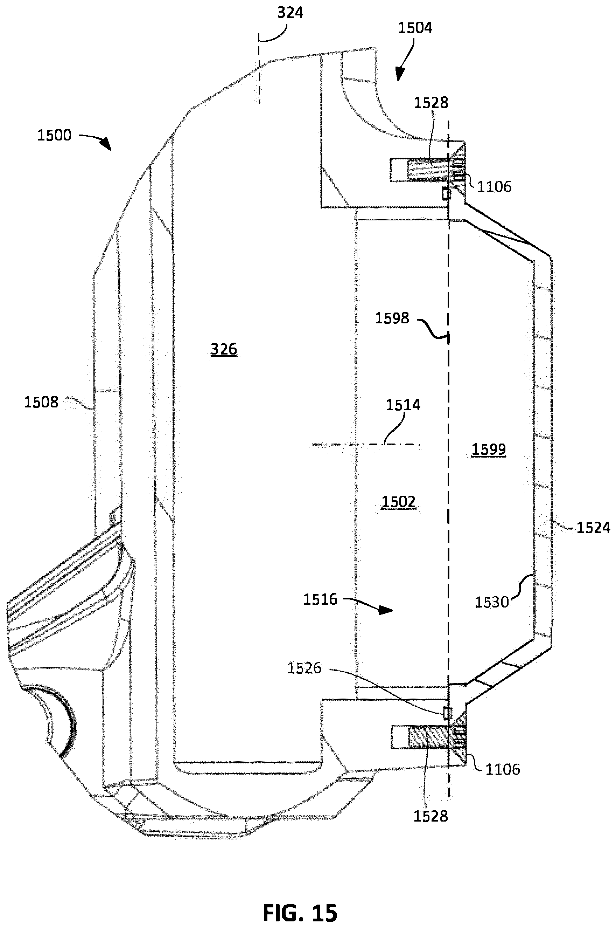

FIG. 15 is an enlarged, partial view of another example lower housing 1500 providing another embodiment of a volume control element 1524. The volume control element 1524 is sized and shaped such that an inner surface 1530 of the volume control element 1524 is disposed above a mounting plane 1598 of a housing 1504 of the lower housing 1500. The volume control element 1524 may be described as at least in part defining a cavity said to define a cavity volume 1599 therein. The cavity volume 1599 is defined between the volume control element 1524 and the mounting plane 1598. In this embodiment of the volume control element 1524, the cavity volume 1599 is additive to the housing volume 1502. A seal 1526 is provided generally on the mounting plane 1598 to seal the cavity volume 1599 and the housing volume.

The lower housing 1500 of FIG. 15 can be implemented on the front fork 108 of the example bicycle of FIG. 1. In some examples, the lower housing 1500 of FIG. 15 may be used with the front fork 200 of FIGS. 2-3 instead of the lower housing 230. As shown in FIG. 15, the lower housing 1500 is defined at least in part by an outer wall 1508 and itself generally defines a lower housing axis or longitudinal axis 324. The housing 1504 is provided protruding from the lower housing 1500 generally along a housing axis 1514.

The foregoing examples of the front fork 108, 200, the housing 236, 801, 1004, 1204, the lower housing 230, 800, 1000, 1200, the second lower tube 226, 802, 1002, 1202, the volume spacer 1300 and/or other components disclosed herein can be employed with suspensions, bicycle, forks, and/or other vehicles. Although each example of front fork 108, 200, the housing 236, 801, 1004, 1204, the lower housing 230, 800, 1000, 1200, the second lower tube 226, 802, 1002, 1202, the volume spacer 1300 disclosed above have certain features, it should be understood that it is not necessary for a particular feature of one example to be used exclusively with that example. Instead, any of the features described above and/or depicted in the drawings can be combined with any of the examples, in addition to or in substitution for any of the other features of those examples. One example's features are not mutually exclusive to another example's features. Instead, the scope of this disclosure encompasses any combination of any of the features.

The example front fork 108, 200, the housing 236, 801, 1004, 1204, the lower housing 230, 800, 1000, 1200, the second lower tube 226, 802, 1002, 1202 and/or other components disclosed herein have been described in connection with right side up forks, which have the larger diameter tube on the bottom and the smaller diameter tube is on the top. However, it is understood that any of the example front fork 108, 200, the housing 236, 801, 1004, 1204, the lower housing 230, 800, 1000, 1200, the second lower tube 226, 802, 1002, 1202 and/or other components disclosed herein can also be implemented on inverted fork designs, which have the larger diameter tube on the top and the smaller diameter tube on the bottom.

Example front forks for bicycles have been disclosed herein. The following paragraphs provide examples and example combinations of the examples disclosed herein.

One example includes a suspension fork for a bicycle, the suspension fork comprising: a first tube comprising an outer mounting portion; a second tube slidably received within the first tube; a first volume disposed between the first tube and the second tube; a sealing element sealing the first volume between the first tube and the second tube; and a volume control element removably attachable to the outer mounting portion of the first tube, wherein the volume control element is operable to change a magnitude of the first volume disposed between the first tube and the second tube.

Another example includes a suspension fork according to the first example, wherein the volume control element comprises a cavity, the cavity defining a second volume that is additive to the first volume disposed between the first tube and the second tube.

Yet another example includes a suspension fork according to any previous example, wherein the volume control element comprises a protuberance, the protuberance shaped and sized to reduce the magnitude of the first volume disposed between the first tube and the second tube.

Yet another example includes a suspension fork according to any previous example, wherein the first tube is a fork lower leg and the second tube is a fork upper leg.

Yet another example includes a suspension fork according to any previous example, further comprising a damper disposed in at least one of the first tube or the second tube.

Yet another example includes a suspension fork according to any previous example, further comprising a spring disposed in at least one of the first tube or the second tube.

Yet another example includes a suspension fork according to any previous example, further comprising a third tube and a fourth tube slidably received within the third tube, wherein the third tube and the fourth tube together form a first leg and wherein the first tube and the second tube together form a second leg.

Yet another example includes a suspension fork according to any previous example, wherein the first leg comprises a first leg volume control element operable to change a magnitude of a third volume defined between the third tube and the fourth tube and sealed with a first leg sealing element.

Yet another example includes a suspension fork according to any previous example, wherein the first leg volume control element comprises a first leg cavity, the first leg cavity defining a fourth volume that is additive to the third volume disposed between the third tube and the fourth tube.

Yet another example includes a suspension fork according to any previous example, wherein the first leg volume control element comprises a first leg protuberance, the first leg protuberance shaped and sized to reduce the magnitude of the third volume disposed between the third tube and the fourth tube.

Yet another example includes a suspension fork comprising: a first tube and a second tube, the first tube having a first end and a second end opposite the first end, the second tube having a third end and a fourth end opposite the third end, the first tube extending into the third end of the second tube to provide a telescopic arrangement along an axis; and a seal coupled to the second tube adjacent the third end of the second tube, the seal forming a sealed residual air space within the second tube, and a volume control element removably attachable to the second tube to expand or reduce the sealed residual air space.

Yet another example includes a suspension fork according to any previous example, wherein the volume control element comprises a cavity, the cavity defining a second volume that is additive to the sealed residual air space.

Yet another example includes a suspension fork according to any previous example, wherein the volume control element comprises a protuberance, the protuberance shaped and sized to reduce a magnitude of the sealed residual air space.

Yet another example includes a suspension fork according to any previous example, wherein the first tube is an upper tube and the second tube is a lower tube.

Yet another example includes a suspension fork according to any previous example, further comprising: a third tube and a fourth tube together forming a first leg, the third tube having a fifth end and a sixth end opposite the fifth end, the second tube having a seventh end and an eighth end opposite the seventh end, the third tube extending into the seventh end of the fourth tube to provide a telescopic arrangement along a first leg axis; and a first leg seal coupled to the fourth tube adjacent the seventh end of the fourth tube, the first leg seal forming a first leg sealed residual air space within the fourth tube.

Yet another example includes a suspension fork according to any previous example, wherein the first leg sealed residual air space is not adjustable.

Yet another example includes a front fork, the front fork comprising: a leg including a first tube and a second tube, the first tube and the second tube configured in a telescopic arrangement, the first tube defining a first interior region that is sealed; and a tunable housing on the second tube, the tunable housing defining a second interior region that is fluidly coupled with the first interior region of the second tube, the first interior region and the second interior region defining a casting volume capacity of the second tube, wherein the second interior region can be reduced or expanded to in turn reduce or expand the casting volume capacity of the second tube.

Yet another example includes a front fork according to any previous example, wherein the tunable housing comprises a cavity, the cavity defining a second volume that results in the second interior region adding to the casting volume capacity of the second tube.

Yet another example includes a front fork according to any previous example, wherein the tunable housing comprises a protuberance, the protuberance shaped and sized to reduce the first interior region of the second tube, in turn reducing the casting volume capacity of the second tube.

Yet another example includes a front fork according to any previous example, wherein the first tube is an upper tube and the second tube is a lower tube.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A suspension fork for a bicycle, the suspension fork comprising:
a first tube comprising an outer mounting portion;
a second tube slidably received within the first tube;
a first volume disposed between the first tube and the second tube;
a sealing element sealing the first volume between the first tube and the second tube; and
a volume control element removably attachable to the outer mounting portion of the first tube, wherein the volume control element is operable to change a magnitude of the first volume disposed between the first tube and the second tube.

2. The suspension fork of claim 1, wherein the volume control element comprises a cavity, the cavity defining a second volume that is additive to the first volume disposed between the first tube and the second tube.

3. The suspension fork of claim 1 or 2, wherein the volume control element comprises a protuberance, the protuberance shaped and sized to reduce the magnitude of the first volume disposed between the first tube and the second tube.

4. The suspension fork of one of the preceding claims, wherein the first tube is a fork lower leg and the second tube is a fork upper leg.

5. The suspension fork of one of the preceding claims, further comprising a damper and/or a spring disposed in at least one of the first tube or the second tube.

6. The suspension fork of one of the preceding claims, further comprising a third tube and a fourth tube slidably received within the third tube, wherein the third tube and the fourth tube together form a first leg and wherein the first tube and the second tube together form a second leg.

7. The suspension fork of claim 6, wherein the first leg comprises a first leg volume control element operable to change a magnitude of a third volume defined between the third tube and the fourth tube and sealed with a first leg sealing element,
wherein as an optional feature:
- the first leg volume control element comprises a first leg cavity,
wherein the first leg cavity defining a fourth volume that is additive to the third volume disposed between the third tube and the fourth tube,
wherein as optional features:
- the first leg volume control element comprises a first leg protuberance,
wherein the first leg protuberance shaped and sized to reduce the magnitude of the third volume disposed between the third tube and the fourth tube.

8. A suspension fork for a bicycle, comprising:
a first tube and a second tube, the first tube having a first end and a second end opposite the first end, the second tube having a third end and a fourth end opposite the third end, the first tube extending into the third end of the second tube to provide a telescopic arrangement along an axis; and
a seal coupled to the second tube adjacent the third end of the second tube, the seal forming a sealed residual air space within the second tube, and
a volume control element removably attachable to the second tube to expand or reduce the sealed residual air space.

9. The suspension fork of claim 8, wherein the volume control element comprises a cavity, the cavity defining a second volume that is additive to the sealed residual air space.

10. The suspension fork of claim 8 or 9, wherein the volume control element comprises a protuberance, the protuberance shaped and sized to reduce a magnitude of the sealed residual air space.

11. The suspension fork of one of the claims 8 to 10, further comprising:
a third tube and a fourth tube together forming a first leg, the third tube having a fifth end and a sixth end opposite the fifth end, the second tube having a seventh end and an eighth end opposite the seventh end, the third tube extending into the seventh end of the fourth tube to provide a telescopic arrangement along a first leg axis; and
a first leg seal coupled to the fourth tube adjacent the seventh end of the fourth tube, the first leg seal forming a first leg sealed residual air space within the fourth tube,
wherein as an optional feature the first leg sealed residual air space is not adjustable.

12. A front fork for a bicycle, the front fork comprising:
a leg including a first tube and a second tube, the first tube and the second tube configured in a telescopic arrangement, the first tube defining a first interior region that is sealed; and
a tunable housing on the second tube, the tunable housing defining a second interior region that is fluidly coupled with the first interior region of the second tube, the first interior region and the second interior region defining a casting volume capacity of the second tube, wherein the second interior region can be reduced or expanded to in turn reduce or expand the casting volume capacity of the second tube.

13. The front fork of claim 12, wherein the tunable housing comprises a cavity, the cavity defining a second volume that results in the second interior region adding to the casting volume capacity of the second tube.

14. The front fork of claim 12 or 13, wherein the tunable housing comprises a protuberance, the protuberance shaped and sized to reduce the first interior region of the second tube, in turn reducing the casting volume capacity of the second tube.

15. The front fork of one of the claims 8 to 14, wherein the first tube is an upper tube and the second tube is a lower tube.
